# EUROPEAN PATENT SPECIFICATION

(11) **EP 2 031 432 B1**
(45) Date of publication and mention of the grant of the patent: **28.11.2012**
(21) Application number: 08252873.8
(22) Date of filing: 29.08.2008
(51) Int. Cl.: G02C 7/04, G02C 7/02, B41M 5/24, B23K 26/36, B29D 11/00, B23K 26/08, B23K 26/06, B23K 26/12, B23K 26/18

(54) **Contact lens and method of manufacturing the same**
Kontaktlinse und Herstellungsverfahren dafür
Lentille de contact et son procédé de fabrication

(30) Priority: 31.08.2007 JP 2007227041
(43) Date of publication of application: 04.03.2009
(73) Proprietor: Menicon Co., Ltd., Nagoya-shi Aichi 460-0006 (JP)
(72) Inventor: Suzuki, Hiroaki, Kasugai-shi, Aichi 487-0032 (JP); Sakai, Yukihisa, Aichi 460-0006 (JP); Yamaguchi, Hiroyuki, Aichi 460-0006 (JP)
(74) Representative: Forsythe, Dominic

(56) References cited:
- EP-A- 0 765 732
- EP-A- 1 014 152
- EP-A- 1 158 339
- WO-A-98/33088
- CN-A- 1 535 848
- JP-A- 7 186 290
- ARVI KRUUSING: "Underwater and water-assited laser processing: Part 2 - Etching, cutting and rarely used methods" OPTICS AND LASERS IN ENGINEERING, ELSEVIER, vol. 41, no. 2, 1 February 2004 (2004-02-01), pages 329-352, XP009118856 ISSN: 0143-8166 [retrieved on 2002-12-31]
- LU J ET AL: "Mechanisms of laser drilling of metal plates underwater" JOURNAL OF APPLIED PHYSICS, AMERICAN INSTITUTE OF PHYSICS. NEW YORK, US, vol. 95, no. 8, 15 April 2004 (2004-04-15), pages 3890-3894, XP012067726 ISSN: 0021-8979

## Description

### BACKGROUND OF THE INVENTION

### 1. Field of the Invention

The present invention relates to a marked contact lens and to a method of manufacturing the same.

### 2. Description of the Related Art

Contact lenses of soft type or hard type, or that combine elements of both, are sometimes provided on the lens surface with an indicia (a mark) for the purpose of identifying the lens as being for use in either the left or right eye; or in the case of a lens that needs to be positioned correctly in the circumferential direction (for example a toric lens or bifocal lens), to identify the circumferential position of the lens; or to indicate the lens serial number, lot number, or other control information.

Techniques for inscribing a contact lens with such markings have been disclosed, for example, in Japanese Unexamined Patent Publication No. JP-A-62-31821 and Japanese Unexamined Patent Publication No. JP-A-4-270312 . These techniques involve methods such as impregnating the interior of the molded lens with a dye, then developing or fixing the impregnated dye through a chemical reaction. However, since such methods require a process for impregnating each molded lens with dye, it is difficult to achieve good production efficiency. Moreover, there is an anxiety that the mark will disappear with repeated cleaning of the lens through rubbing, disinfection through boiling, and so on.

Accordingly, laser processing techniques as proposed, for example in Japanese Unexamined Patent Publication No. JP-A-8-194193 have come to be widely used, whereby an engraved marking, produced by directing a laser beam of high-density focused light energy onto the die which is used to mold the resin mold for shaping the contact lens, is transferred to the lens surface via the resin mold; or a laser beam is aimed directly onto the lens surface to modify the shape of the lens surface and create a mark. With such processes, since the mark is actually engraved onto the lens surface, the anxiety of the mark disappearing is reduced.
come to be widely used. With such processes, since the mark is actually engraved onto the lens surface, the anxiety of the mark disappearing is reduced.

However, since a mark integrally formed on the lens surface in this way will have transparency comparable to the lens surface, it may be a problem to ensure adequate visibility. In view of this problem, various mark morphologies have been examined with a view to improving visibility.

For example, US Pat. No. 6203156 proposes a mark morphology having a bottom face of smooth concave shape. With such a mark, visibility will be improved through focused reflection of an incident light beam from the smooth concave bottom face. However, with a smooth face, since most of the incident light is transmitted rather than reflected, it may be difficult to produce sufficient reflected light. Accordingly, in order to ensure effective visibility it was necessary for the mark to have larger size (enlargement) and greater depth (deepening) in order to effectively capture most of the incident light and effectively focus the incident light.

US Pat. No. 6568807 on the other hand proposes a mark morphology having a bottom face of smooth convex shape. However, with the mark taught in this publication as well, since the bottom face is a smooth face most of the incident light will be transmitted through the bottom face, making it difficult to obtain sufficient reflected light. Thus for the same reason as in US Pat. No. 6203156 , it was necessary for the mark to enlarged in order to obtain much reflected light. Furthermore, with the mark taught in US Pat. No. 6568807 as well, formation of an annular concave portion surrounding the convex portion at the center could cause the mark to deepen.

Thus, with the contact lenses of both US Pat. No. 6203156 and US Pat. No. 6568807 , enlarging and deepening of the mark were the only ways to enhance visibility of the mark. However, enlarging and deepening of the mark is undesirable due to problems such as: (1) diminished lens strength and durability caused by thinning of the lens due to the mark; (2) possible injury to the anterior part of the eye due to increased irritation of the eye by the mark; (3) rotation or shifting of the lens when being placed in the eye due to the mark catching on the eyelid etc.; or (4) adverse effects on vision caused by refracted light, reflected light, or lens distortion in the area of the mark.

EP-A-1 158 339 discloses a contact lens having visible inversion marks formed thereon. The marks include a plurality of recessed spots having sidewalls, a substantially convex bottom surface, and a relatively shallow maximum depth of between 7.5microns and 12 microns. The recessed spots provide highly visible marking indicia on a contact lens with minimum discomfort for a wearer.

ARVI KRUUSING:"underwater and water-assisted laser processing: Part 2-Etching, cutting and rarely used methods" OPTICS AND LASERS IN ENGINEERING, ELSEVIER,vol. 41, no. 2, 1 February 2004 (2004-02-01), pages 329-352, XP009118856 ISSN: 0143-8166 discloses methods for laser etching and cutting in the presence of liquid water.

### SUMMARY OF THE INVENTION

It is accordingly one object of the present invention to provide a contact lens of novel construction furnished with a mark that affords better visibility, while avoiding the need to enlarge or deepen the mark.

It is another object of the present invention to provide a novel method of manufacture of a contact lens, whereby a contact lens furnished with such a mark can be manufactured advantageously.

The above mentionned problems are solved by a contact lens according to claim 1 and a contact lens manufacturing method according to claim 7.

A first aspect relates to a contact lens, and a first mode thereof provides a contact lens having a mark on at least one of an anterior face and a posterior face thereof, wherein:
the mark is defined by a concave annular section having inside and outside peripheral borders of circular shape, and a center projection situated in a center of the concave annular section;
an outside diameter dimension of the concave annular section is within a range of 0.1-0.5mm;
a widthwise center section of the concave annular section in radial cross section is a flat section (42) having smaller depth change and greater radius of curvature than widthwise side sections; and
at least the flat section of the mark has a rough surface, characterized in that:
   the radius of curvature of the flat section is greater by a factor of 10 or more than a minimum value of radius of curvature of connecting sections with side wall sections at either side of the flat section.

In the contact lens of construction according to this mode, when light impinges on the mark, transmission of incident light will be reduced and scattering of the incident light will be produced at the rough surface of the flat section. The flat section will therefore appear brighter so that the visibility of the mark is enhanced. At the same time, when light impinges on the mark, the center projection will cast a shadow on the concave annular section. Thus, according to this mode, since the flat section appear bright due to scattering of light by the rough surface, the center projection will cast a shadow with more definite contrast onto the concave annular section, so that the visibility of the mark can be further enhanced as a result.

Additionally, according to this mode, the flat section is formed in the concave annular section, making it possible to limit the depth dimension of the mark, as well as to limit enlargement of the mark while at the same time ensuring a larger effective surface area. It will be possible thereby to ensure effective visibility on the part of the mark, while keeping its outside diameter dimension small. By thusly limiting enlargement and deepening of the mark, it will be possible to completely prevent problems such as (1) diminished lens strength and durability caused by thinning of the lens due to the mark, (2) possible injury to the anterior part of the eye due to increased irritation of the eye by the mark, (3) rotation or shifting of the lens when being placed in the eye due to the mark catching on the eyelid etc., and (4) adverse effects on vision caused by refracted light, reflected light, or lens distortion in the area of the mark.

Furthermore, since the mark of construction according to this mode has annular shape, its outer peripheral border lacks any straight section. Thus, contact pressure by the eyelid etc. can be deftly relieved to either side of the mark in the circumferential direction. For this reason, the anxiety of catching can be advantageously avoided, and it will be possible to achieve effective reduction in friction against the eyelid, and to achieve effective reductions in slippage, interference, or irritation in association with blinking during wear.

In the mark of construction according to this mode, the flat section at the widthwise center of the grooved contour of the radial cross section of the concave annular section will have a greater radius of curvature than do the connecting sections thereof that connect with side wall sections to either side. In this case the presence in the widthwise center section of the groove of a zone having a greater radius of curvature than the widthwise side sections of the groove enables the presence of the flat section at the bottom of the groove to be recognizable. The radius of curvature of the flat section will be greater by a factor of 10 or more than the minimum value of radius of curvature of the connecting sections with the side wall sections at either side; a substantially flat face having an infinitely large radius of curvature (i.e. a straight line in horizontal cross section) would be acceptable as well.

In the flat section, the center of curvature, inclusive of the connecting sections with the side wall sections at either side, will be situated towards the opening side of the groove. Furthermore, the inside face of the groove in transverse cross section, over the entirely thereof inclusive of the side wall sections at either widthwise side, the flat section, and the connecting sections thereof, will be defined by a smooth curve of gradually varying radius of curvature devoid of inflection points; or by a curve and straight line.

A second mode of the first aspect provides the contact lens according to the first mode, wherein on a grooved contour of the radial cross section of the concave annular section, the flat section is formed on a bottom portion thereof with a width dimension equal to one-third or more of a width dimension of an opening of the groove, and with a flatness of the flat section being 5 µm or less.

In the contact lens of construction according to this mode, deepening of the mark can be limited more effectively while still effectively ensuring effective visible surface area of the mark. Specifically, on the grooved contour of the radial cross section of the concave annular section, if the flat section is smaller than one-third of the width dimension of the groove opening, the flat section will be too small to effectively afford the effect of increased visible surface area etc. At the same time, if the flat section is too small, the difference in groove depth of the concave annular section between when a flat section is present and when one is not will become negligible, making it difficult to effectively limit deepening of the mark. Moreover, if the flatness of the flat section is greater than 5 µm, the mark will tend to deepen, posing an anxiety of diminished lens strength.

In this mode, flatness refers to a value for a surface derived from an average surface of the rough surface. That is, it indicates variation in groove depth dimension on the average surface, and is expressed as the difference in depth dimension between the deepest point and the shallowest point. In other words, the condition of this mode shall be deemed to be met where, in the radial cross section of a groove whose rough surface has been represented by an average surface, if two points respectively having groove depth of -5 µm are designated to either side in the width direction from the point of maximum depth, the widthwise distance between these two points will be equal to one-third or greater of the width of the groove opening. In order to further improve visibility of the mark, in preferred practice the flatness of the flat section will be no more than 2 µm.

A third mode of the first aspect provides the contact lens according to the first or second mode, wherein a distal end face of the center projection has an outside diameter dimension of a size equal to 0.02 mm φ or greater.

In the contact lens of construction according to this mode the distal end face of the center projection has a specific outside diameter dimension, thereby giving the center projection a generally truncated cone shape. With this arrangement, the direction of light reflection can be varied between the distal end face of the center projection and the inside peripheral wall of the concave annular section which surrounds the center projection, so that visibility of the mark can be further improved. At the same time, the anxiety of the distal end of the center projection becoming caught on the eyelid can be reduced as well, thus reducing the anxiety of rotation of the lens or a sensation of a foreign body, caused by catching on the eyelid.

It will be appreciated from the description of this mode that, for example in the preceding first mode, the distal end face of the center projection may be formed as a point substantially devoid of any planar dimensions. In this case, since the inside peripheral wall of the concave annular section surrounding the center projection has generally conical shape in its entirety, the direction of light reflection on the mark surface will differ, which will have the effect of improving visibility due to the presence of the center projection.

Imparting a prescribed size to the distal end face of the center projection in accordance with this mode will result in a more marked difference in the direction of light reflection between the distal end face of the center projection and the inside peripheral wall of the concave annular section surrounding the center projection, thus affording further improvement in visibility of the mark overall.

The distal end face of the center projection will be constituted as a flat surface in order to produce a more marked difference in slope angle (and hence in the direction of light reflection) relative to the inside peripheral wall of the concave annular section surrounding it and to thereby improve the visibility of the mark, the distal end face could also have a curving surface such as a convex spherical face.

A fourth mode of the first aspect provides the contact lens according to the third mode, wherein the distal end face of the center projection has a rough surface of a degree of surface roughness smaller than the rough surface of the flat section of the concave annular section.

In the contact lens of this construction according to this mode, a rough surface is provided to the distal end face of the center projection in addition being provided to the flat section, whereby the effect of scattering light impinging on the mark can be afforded more effectively, and visibility of the mark can be improved further. By imparting differing degrees of surface roughness to the flat section and to the distal end face of the center projection, it will be possible to produce conditions of light scattering that differ between the flat section and the distal end face of the center projection and to create zones having different visibility, whereby visibility can be improved further. At the same time, by employing smaller surface roughness at the distal end face of the center projection which during wear will be positioned in proximity to the eyelid or the cornea, the anxiety of catching or of a sensation of a foreign body can be reduced. In this mode, surface roughness refers to a peak and valley pattern, exclusive of any curve of the surface.

A fifth mode of the first aspect provides the contact lens according to any one of the first to fourth modes, wherein a connecting section of the inside peripheral border with the center projection, and a connecting section of the outside peripheral border with the lens surface, have smoothly curving shape in radial cross section, respectively.

In the contact lens of construction according to this mode, the radial cross section of the mark is defined over its entirety by a smooth curve or by a curve and a straight line. With this arrangement, irritation of the eyelid etc. can be reduced further, and the anxiety of catching can be lowered. In this mode, a radial cross section with a smoothly curving shape refers to a cross sectional shape having gradually varying radius of curvature overall and devoid of inflection points, i.e. of turning points lacking a common tangent. The entire surface of the mark may be constituted as a rough surface, in which case the radius of curvature of the average line of the rough surface will vary gradually, with no turning points.

A sixth mode of the first aspect provides the contact lens according to any one of the first to fifth modes, wherein the outside peripheral section of the concave annular section is imparted about an entire circumference with a rough surface having smaller degree of surface roughness than the rough surface of the flat section of the concave annular section.

In the contact lens of construction according to this mode by imparting a rough surface to the outside peripheral section of the concave annular section, transmission of a beam of light impinging on the concave annular section can be reduced, so that more effective scattering of incident light can be achieved. Thus, an effect comparable to enlarging the concave annular section can be achieved, and the concave annular section can be substantially enlarged so that visibility of mark can be improved further. Moreover, by imparting the flat section and the outside peripheral section of the concave annular section with differing degrees of surface roughness, it will be possible to endow the flat section and the outside peripheral section of the concave annular section with differing conditions of light scattering and to create zones having different visibility, whereby visibility can be improved further.

Moreover, since actual enlargement of the concave annular section may be avoided, the anxiety of problems such as diminished lens strength or catching on the eyelid etc. associated with an enlarged mark can be avoided more effectively as well. Additionally, by employing smaller surface roughness at the outside peripheral section of the concave annular section which during wear will be positioned in proximity to the eyelid or the cornea, the anxiety of catching or of a sensation of a foreign body can be reduced.

A seventh mode of the first aspect provides the contact lens according to any one of the first to sixth modes, wherein a groove depth in the radial cross section of the concave annular section is held within a range of 12-36 µm at an average face of the flat section.

In the contact lens of construction according to this mode, good visibility can be ensured without sacrificing lens strength. Specifically, if the groove depth of the concave annular section is smaller than 12 µm, the surface area of the concave annular section (and consequently of the flat section) will be too small to afford sufficient scattering action by the rough surface of the flat section; at the same time, the height dimension of the center projection will be too short to cast a distinct shadow, posing an anxiety of diminished visibility. On the other hand, if the groove depth is greater than 36 µm, there is an anxiety of diminished lens strength due to excessive depth of the concave annular section.

An eighth mode of the first aspect provides the contact lens according to any one of the first to seventh modes, wherein the rough surface of the flat section in the concave annular section has an Ra value that is held within a range of 0.2 µm - 5 µm_{.}

In the contact lens of construction according to this mode, good visibility can be ensured while maintaining lens strength. Specifically, if the rough surface of the flat section has an Ra value of less than 0.2 µm, it will essentially be no different from a sleek, smooth surface and will tend to transmit most incident light, making it difficult to attain good visibility. On the other hand, if the rough surface of the flat section has an Ra value of greater than 5 µm, the projections on the flat section will be too large, posing the anxiety of inability of the center projection to cast a distinct shadow onto the flat section, with the attendant anxiety of reduced visibility; while at the same time producing sections of considerable groove depth in the concave annular section, posing the anxiety of diminished lens strength.

A ninth mode of the first aspect provides a contact lens according to any one of the first to eighth modes, wherein a ring-shaped small projecting portion of 1.8 µm or less in height is formed in the outside peripheral section of the concave annular section.

In the contact lens of construction according to this mode, the direction of reflection of incident light will be different due to the presence of the ring-shaped projection at the outside peripheral border of the mark, so that the contours of the mark can be made to stand out, affording even better visibility. By limiting the height of the ring-shaped projection to no more than 1.8 µm, contact pressure against the eyelid or cornea can be minimized so as to ensure good wear comfort.

A tenth mode of the first aspect provides the contact lens according to any one of the first to ninth modes, wherein the mark is formed simultaneously with molding of the lens using a lens-molding resin mold that has been produced with a mold die, by means of transferring a mark pattern that has been formed in the mold die to the lens-molding resin mold, and subsequent re-transfer thereof to the lens; and the mark pattern in the mold die is formed through scanning of a laser beam in a circumferential direction over a width equivalent to two or more scan lines in a radial direction.

In the contact lens of construction according to this mode through scanning of a laser beam in the circumferential direction, a region corresponding to the concave annular section of the mark can be formed in the section scanned by the laser beam, while a region corresponding to the center projection of the mark can be formed in the center section which is not irradiated with the laser beam.

During subsequent transfer of the mark pattern produced in this way to the lens surface, it will be possible for transfer to take place through a process comparable to mold processes widely employed in manufacture of contact lenses in the past, so that there is substantially no increase in the number of process steps on the lens production line, and so that excellent production efficiency can be achieved. Moreover, since the mark pattern formed on the die is transferred to the lens surface, variability in mark shape can be reduced even in situations where large numbers of lenses are manufactured, so that superior product consistency is achieved.

An eleventh mode of the first aspect provides the contact lens according to the tenth mode, wherein the laser beam used to form the mark pattern on the mold die has a spot diameter of 0.05 mm or less.

In the contact lens of construction according to this mode, a mark having peak and valley dimensions such that lens strength does not suffer can be formed advantageously, while maintaining good visibility. Specifically, if the spot diameter of the laser beam exceeds 0.05 mm, melting of the processing surface will be produced over a wider range, resulting in larger peaks and valleys of the rough surface that is formed on the flat section, which in turn poses the anxiety of reduced scattering of incident light and reduced visibility. Additionally, larger spot diameter is associated with greater depth dimension on the processing surface, with an anxiety of diminished lens strength.

A twelfth mode of the first aspect provides the contact lens according to the tenth or eleventh mode, wherein the mark pattern is formed through scanning of the laser beam along two or more scan lines in the radial direction of the mark pattern, with a center axis of the laser beam positioned at intervals of 0.03 mm or less.

In the contact lens of construction according to this mode, the spot of the laser beam can be scanned in overlapping fashion, thereby reducing the anxiety that any unprocessed portions or ridges will remain at the scan line boundaries. The flat section may be formed advantageously on the bottom face of the concave annular section thereby.

A thirteenth mode of the first aspect provides the contact lens according to any one of the tenth to twelfth modes, wherein the mark pattern is formed by scanning the laser beam along four or more scan lines in the radial direction of the mark pattern.

In the contact lens of construction according to this mode, the flat section of the mark can be formed advantageously. Specifically, since a processed section formed in a single pass of the laser beam will have a curved cross sectional shape, in order to produce a flat shape it is preferable to scan the spot repeatedly in overlapping fashion; but if the number of scan passes is less than four lines, the bottom face of the concave annular section will tend to have a curved shape due to the small number of times of overlap by the spot.

A fourteenth mode of the first aspect provides the contact lens according to any of the tenth to thirteenth modes, wherein the mark pattern on the mold die has been formed through irradiation with the laser beam while submerged in a liquid.

In the contact lens of construction according to this mode, the rough surface of sections corresponding to the flat section etc. of the mark pattern can be formed with finer detail and clearer definition, as compared to where laser irradiation is carried out in the air. Accordingly, the rough surface of the flat section etc. of the mark produced through transfer of the mark pattern to the lens face can be formed with finer detail and clearer definition. Moreover, bulging of the outer peripheral border of the mark pattern can be limited, so that the height dimension of the ring-shaped projection taught in the preceding ninth mode can be advantageously kept to no more than 1.8 µm.

While the scientific basis for why a better rough surface can be formed with laser irradiation carried out while submerged in liquid, as compared to laser irradiation carried out in the air, is not sure, it is thought that where laser irradiation is carried out in the air, heat tends be transferred to the area around the focal point location as well, inducing melting over a relatively wide range in a vicinity that includes the focal point location, so that a smooth surface tends to form. In contrast, it is thought that where laser irradiation carried out in a liquid, evolution of heat in the vicinity of the focal point location will be limited so that melting will take place intensively at the focal point location; and that redeposition of swarf produced by laser machining is avoided, thereby reducing the drop in energy density of the laser beam caused by swarf. Moreover, while the scientific basis for why bulging of the outer peripheral border of the mark pattern is poorly understood, it is thought that where laser irradiation carried out in liquid, there will be less bulging of the outer peripheral border of the mark pattern caused by thermal deformation, owing to reduced evolution of heat in the vicinity of the focal point location.

By carrying out laser irradiation in liquid, redeposition of swarf produced by laser processing can be reduced. It is accordingly possible to limit soiling or molding defects caused by deposited swarf, and to obviate the need for a cleaning step, thereby affording better production efficiency.

A fifteenth mode of the first aspect provides the contact lens according to any one of the first to fourteenth modes, wherein the mark is situated in a peripheral zone formed surrounding an optical zone of the lens, and is formed in zone between 2.7 mm and 6.0 mm radially outward from a lens center.

In the contact lens of construction according to this mode, since the mark will be situated at location away from the pupil of the eye during wear, the anxiety of adverse effects of refraction or reflection by the mark on the optical properties of the lens can be avoided. Also, since it will be possible to avoid forming the mark in the outside peripheral edge part of the lens, diminished wear comfort or rotation of the lens due to catching on the eyelid etc. can be advantageously avoided. It is moreover possible to avoid making the edge of the lens thinner due to formation of the mark at the edge of the lens, with the anxiety of reduced strength.

A sixteenth mode of the first aspect provides the contact lens according to any one of the first to fifteenth modes, wherein a plurality of marks are formed in a grouped arrangement.

In the contact lens of construction according to this mode, by forming a plurality of appropriately arrayed marks it will be possible to represent any of various shapes, alphanumeric characters, graphic symbols, and the like. According to the mark herein in particular, since excellent visibility can be achieved without enlarged size, even if an alphanumeric character or the like is depicted using multiple marks, it will be possible to form the alphanumeric character with smaller size while still maintaining good visibility. This makes it possible to reduce the anxiety that the alphanumeric character will stand out to the extent that the appearance of the lens suffers, as well as to depict more alphanumeric characters or graphic symbols on the lens surface of a contact lens having a limited area for depiction, so that more information can be represented.

Furthermore, since alphanumeric characters formed by multiple marks can be smaller in size, catching on the eyelid can be suppressed, thus reducing the anxiety of rotation of the lens or sensation of a foreign body, caused by catching. In particular, since the mark herein is annular in shape and devoid of any straight sections at its outer border, the anxiety of catching can be reduced more advantageously.

A seventeenth mode of the first aspect provides the contact lens according to the sixteenth mode, wherein the grouping area in the mark has a size of 2.2 mm or smaller in a radial direction of the lens.

In the contact lens of construction according to this mode, the anxiety of diminished appearance or of sensation of a foreign body can be reduced. Specifically, if the mark grouping area has a size greater than 2.2 mm, there is an anxiety that the mark grouping will stand out to the point that appearance is diminished, and of overlap with the eyelid producing a sensation of a foreign body. Since the marks herein afford good visibility despite their small outside diameter dimension, good visibility will be afforded even where the grouping area is no more than 2.2 mm in size.

An eighteenth mode of the first aspect provides the contact lens according to the sixteenth or seventeenth mode, wherein the distance separating the plurality of the marks from one another is equivalent to between one-third and twice the outside diameter dimension of the mark.

In the contact lens of construction according to this mode, the anxiety of catching on the eyelid etc. can be reduced while still maintaining good visibility. Specifically, if marks are situated too close together, there is an anxiety of considerable sensation of a foreign body, or of rotation or position shift of the lens caused by catching on the eyelid etc., as well as of reduced lens strength owing to the marks being grouped densely together. On the other hand, if the marks are too far apart, there is an anxiety that graphic symbols or alphanumeric characters represented by a grouping of marks will not be readily recognizable as such.

A second aspect relates to a method of marking a contact lens, and a first mode of the second aspect provides a method of manufacturing a contact lens having a mark formed on at least one of an anterior face and a posterior face of the contact lens, the mark being produced simultaneously with mold forming of the contact lens in a lens molding cavity defined by a lens-molding resin mold which has been produced by a mold die, through transfer of a mark pattern that has been formed in the mold die to the lens-molding resin mold and subsequent re-transfer thereof to the contact lens, the method comprising the step of:
producing the mark pattern that includes a concave annular section having circular inner and outer peripheral borders and a center projection situated to a center of the concave annular section by engraving the concave annular section into the mold die using a laser beam, while submerged in a liquid, such that an outside diameter dimension of the concave annular section is within a range of 0.1-0.5mm; a width wise center section of the concave annular section in radial cross section is a flat section having smaller depth change and greater radius of curvature than widthwise side sections; and at least the flat section of the mark has a rough surface, characterised in that:
   the radius of curvature of the flat section is greater by a factor of 10 or more than a minimum value of radius of curvature of connecting sections with side wall sections at either side of the flat section.

According to the method of this mode, since the mark can be produced through a process comparable to mold processes widely employed in manufacture of contact lenses in the past, there will be substantially no increase in the number of process steps on the lens production line, and excellent production efficiency can be achieved. Moreover, since the mark pattern formed on the die is transferred to the lens surface, variability in mark shape can be reduced even in situations where large numbers of lenses are manufactured, so that superior product consistency is achieved.

In the method according this mode, the mold die is irradiated with a laser beam while submerged in a liquid. By so doing, the peak and valley contours of the rough surface of sections corresponding to the flat section etc. of the mark pattern can be formed with finer detail and clearer definition, as compared to where laser irradiation is carried out in the air; and accordingly the rough surface of the flat section etc. of the mark produced through transfer of this mark pattern to the lens face can be formed with finer detail and clearer definition. Moreover, bulging of the outer peripheral border of the mark pattern can be limited, so that the height dimension of the ring-shaped projection taught in the preceding ninth mode can be advantageously kept to no more than 1.8 mm.

By carrying out laser processing in liquid, deposition of swarf produced by laser processing can be reduced. It is accordingly possible to limit soiling or molding defects caused by deposited swarf, and to obviate the need for a cleaning step, thereby affording better production efficiency.

The mark formed through transfer of the mark pattern to the lens face in this way includes a concave annular section having circular inner and outer peripheral borders, and a center projection formed to the center of the concave annular section. When a beam of light impinges on the mark, since the concave annular section has a rough surface, transmission of light incident on the concave annular section will be limited and of the light will be effectively scattered. At the same time, the center projection will cast a shadow on the concave annular section, producing distinct contrast through reflection from the concave annular section and the shadow of the center projection, whereby a mark having excellent visibility can be obtained at excellent production efficiency.

A second mode of the second aspect provides the method of manufacturing the contact lens according to the first mode, wherein the mark pattern in the mold die is formed with a shape such that an outside diameter dimension of the concave annular section is held within a range of 0.1-0.5 mm, and a widthwise center section of the concave annular section in radial cross section constitutes a flat section having smaller depth change and greater radius of curvature than the widthwise side sections.

In the method according this mode, a contact lens furnished with a mark having better visibility can be formed advantageously, while limiting enlargement and deepening of the mark. Specifically, by limiting the outside diameter dimension of the mark pattern to between 0.1 and 0.5 mm, the mark formed on the lens face through transfer of the mark pattern thereon can be kept to a small outside diameter dimension. By forming a flat section in the concave annular section of the mark pattern, it will be possible to limit deepening of groove depth in an area corresponding to the concave annular section of the mark so formed. At the same time, since formation of the flat section ensures a larger surface area in the area corresponding to the concave annular section in the mark, greater levels of incident light and reflected light can be ensured, and visibility can be improved.

A third mode of the second aspect provides the method of manufacturing the contact lens according to the first or second mode, wherein the mark pattern is formed through scanning of the laser beam in a circumferential direction by an equivalent of two or more scan lines in a radial direction.

In the method according this mode, by scanning the laser beam over multiple lines in the radial direction it is possible to advantageously ensure sufficient radial width dimension for the concave annular section, while at the same time allowing the mark pattern to be formed with highly accurate adjustment of the radial width dimension of the concave annular section.

A fourth mode of the second aspect provides the method of making a contact lens according to the third mode wherein, during scanning of the laser beam, a spacing of scans of the laser beam at a center axis thereof in the radial direction of the mark pattern is smaller than a spot of the laser beam.

In the method according this mode, the spot of the laser beam can be scanned in overlapping fashion. It will be possible thereby to reduce the anxiety of unprocessed portions or ridges remaining at the scan line boundaries, and to advantageously form a flat section on the bottom face of the concave annular section.

A fifth mode of the second aspect provides the method of making a contact lens according to any one of the first to fourth modes, wherein the laser beam is a laser beam with spot diameter of 0.05 mm or smaller.

In the method according this mode, a mark having peak and valley dimensions such that lens strength will not suffer can be formed advantageously, while maintaining good visibility. Specifically, if the spot diameter of the laser beam exceeds 0.05 mm, melting of the processing surface will occur over a wider range, resulting in larger peaks and valleys of the rough surface that is formed on the flat section, which poses the anxiety of reduced scattering of incident light and reduced visibility. Additionally, larger spot diameter is associated with greater depth dimension on the processing surface, with an anxiety of diminished lens strength.

### BRIEF DESCRIPTION OF THE DRAWINGS

The foregoing and/or other objects features and advantages will become more apparent from the following description of a preferred embodiment with reference to the accompanying drawings in which like reference numerals designate like elements and wherein:
FIG. 1 is a partially cutaway perspective view of a contact lens according to one embodiment of the present invention;
FIG. 2 is a top plane view of a grouped arrangement of marks formed on the contact lens of FIG. 1;
FIG. 3 is a front elevational view showing the marks of FIG. 2;
FIG. 4 is a schematic view in a radial cross section of the marks of FIG. 2;
FIG. 5 is a vertical cross sectional view of a die for molding a female mold used in a manufacturing method according to one example of the present invention;
FIG. 6 is a vertical cross sectional view illustrating one step of the manufacturing method of the present invention;
FIG. 7 is an enlarged view illustrating a principle part of FIG. 6;
FIG. 8 is a front elevational view of mark patterns formed by the method of the present invention;
FIG. 9 is a vertical cross sectional view illustrating another step of the manufacturing method of the present invention;
FIG. 10 is a vertical cross sectional view illustrating yet another step of the manufacturing method of the present invention;
FIG. 11 is a front elevational view of mark patterns formed by a manufacturing method according to another example of the present invention;
FIGS. 12A, 12B and 12C are views showing the results of surface examination by differential interference microscope of marks; and
FIGS. 13A and 13B are views showing the results of surface examination by scanning electron microscope.

### DETAILED DESCRIPTION

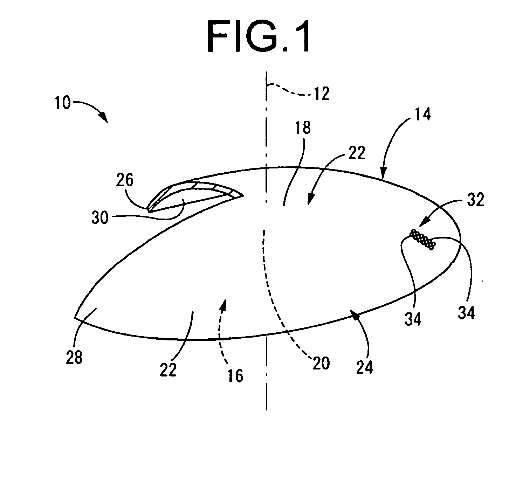

First, FIG. 1 depicts a marked contact lens (hereinafter "contact lens") 10 as one embodiment of the contact lens of construction in accordance with the present invention. The contact lens 10 has a thin, generally spherical shell shape overall, and is adapted to be worn superimposed on the anterior face of the cornea of the eye. The term "wear" herein refers to use placed in the human eye.

To describe in greater detail, it is possible for the contact lens 10 according to the embodiment to be embodied in contact lenses of various different kinds such as soft contact lenses, hard contact lenses, or disposable type contact lenses. The contact lens 10 employs a resin material composed of any of various polymerizable monomers endowed with optical properties such as light transmissivity, specific examples being hydroxyethyl methacrylate (HEMA), polymethyl methacrylate (PMMA), cellulose acetate butyrate (CAB), silicone copolymers, fluorosilicone acrylate, fluorocarbon polymers, or silicone rubber.

The contact lens 10 has a lens center axis 12 as its optical axis, and is of rotationally symmetric shape about the lens center axis 12. As a general rule, the radial direction of the contact lens 10 herein refers to the direction of a straight line orthogonal to the lens center axis 12.

The contact lens 10 also has a lens anterior face 14 defined by a generally convex spherical face, and a lens posterior face 16 defined by a generally concave spherical face. An anterior face optical zone 18 and a posterior face optical zone 20 are formed in the center sections of the lens anterior and posterior faces respectively; the anterior face optical zone 18 and a posterior face optical zone 20 together constitute an optical zone 22. Here, any of a number of shapes, including high order polynomial, may be employed as the radial cross sectional shape for the anterior face optical zone 18. In this embodiment in particular, the anterior face optical zone 18 has a convex arcuate cross section of generally constant radius of curvature.

Meanwhile, the posterior face optical zone 20 has a concave shape generally corresponding to the shape of the anterior surface of the cornea, and employs a spherical or aspherical face with an appropriate of radius of curvature, so as produce the required optical properties (such as vision correction ability) in cooperation with the anterior face optical zone 18. In order to impart vision-correcting optical properties to the lens, a toric face is formed on the posterior face optical zone 20 so as to produce appropriate cylindrical power through an appropriate cylindrical axis.

Furthermore, in the optical zone 22, the anterior face optical zone 18 and a posterior face optical zone 20 are each formed with the lens center axis 12 as their geometric center axis, and the geometric center axis of the optical zone 22 is the same as the lens center axis 12. Moreover, while the anterior face optical zone 18 has a generally constant curvature radius thereby imparting the optical zone 22 with a single spherical power, it would be possible through appropriate design adjustment of the curvature radius of the anterior face optical zone 18 to impart bifocal spherical power or multifocal spherical power, for example.

The optical zone 22 is the region intended to provide optical effect to the eye of the wearer, and its outer peripheral border, in other words its boundary with a peripheral zone 24 (discussed later), typically takes the form of a change point of curvature on the longitudinal cross section of the lens anterior face 14 and the lens posterior face 16 respectively; however, where for example the lens face of the optical zone 22 is designed with a gradually changing longitudinal cross section in the radial direction, or where the boundary is defined with prescribed width in the radial direction by a connecting region that smoothly connects the optical zone 22 and the peripheral zone 24 between the lens anterior and posterior faces 14, 16, the boundary of the optical zone 22 and the peripheral zone 24 on the lens anterior and posterior faces 14, 16 need not necessarily be a distinct line.

The peripheral zone 24 and an edge zone 26 are formed in the outside peripheral section surrounding the optical zone 22. The edge zone 26 has an annular shape at the outermost edge of the contact lens 10, and in the lens longitudinal cross section is furnished with lens anterior and posterior faces of chamfered shape extending inward from the outer peripheral edge face of generally semicircular shape. The lens anterior and posterior faces of the edge zone 26 connect with anterior and posterior face peripheral zones 28, 30.

The anterior face peripheral zone 28 and the posterior face peripheral zone 30 respectively have generally annular shape surrounding the anterior face optical zone 18 and the posterior face optical zone 20 about their entire circumference, and are disposed straddling the anterior and posterior face optical zones 18, 20 and the edge zone 26 of the lens. The inner peripheral boundary sections of the anterior and posterior face peripheral zones 28, 30 respectively connect with the anterior and posterior face optical zones 18, 20, while the outer peripheral boundary sections of the anterior and posterior face peripheral zones 28, 30 connect with the edge zone 26. The anterior face peripheral zone 28 and the posterior face peripheral zone 30 thereby cooperatively define the peripheral zone 24 situated peripherally outward from the optical zone 22 of the contact lens 10.

An indicia symbol 32 is made at a prescribed location on the anterior face peripheral zone 28. The indicia symbol 32 is provided for the purpose of identifying the anterior or posterior face or a circumferential location on the contact lens 10, whether the contact lens 10 is intended for wear in the left or right eye, or other such information, and no particular limitation is imposed as to the shape, size, or design thereof, it being possible to employ any of various shapes, alphanumeric characters, graphic symbols, or the like.

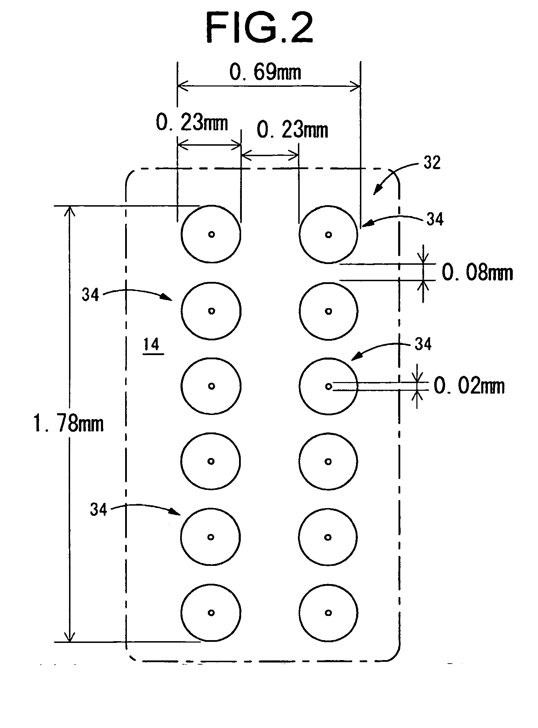

The indicia symbol 32 is composed of a plurality of marks 34 of generally dot shape in a grouped arrangement. In this embodiment, the marks 34 are arranged in six rows in the lens radial direction (the vertical direction in FIG. 2) and two rows in the lens circumferential direction (the left-right direction in FIG. 2), for a total of 12 marks 34 creating the appearance of a rectangle. With the indicia symbol 32 formed in a region located at the 6 o'clock position during wear of the contact lens 10, with its lengthwise direction (the vertical direction in FIG. 2) extending in the lens radial direction. Thus, when the contact lens 10 is worn at the correct circumferential position, the indicia symbol 32 will indicate the 6 o'clock position in the eye.

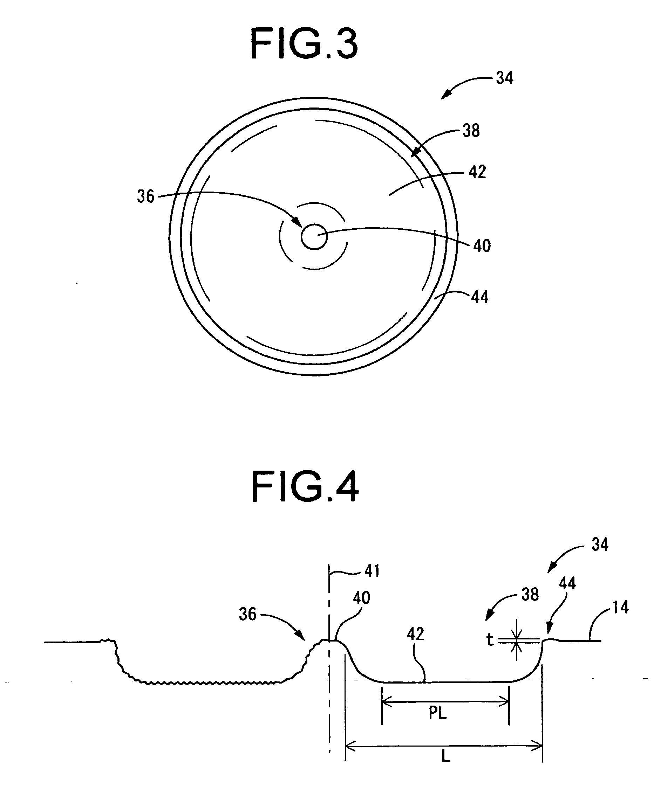

The marks 34 that make up the indicia symbol 32 are similar in constitution to one another. A top view of a mark 34 is depicted in FIG. 3; and a model depiction of the diagonal cross section of a mark 34 is depicted in FIG. 4. As will be discussed later, the marks 34 in this embodiment have been provided with a rough surface over their entire surface; to aid understanding, in FIG. 4, half of the radial cross section (the left half in FIG. 4) is depicted with peaks and valleys (not to scale) to convey the impression of a rough surface. In FIG. 4, for the other half of the radial cross section (the right half in FIG. 4), an average surface of the surface of the mark 34 is depicted in ideal form. The mark 34 is integrally formed with the lens anterior face 14, with a generally annular shape in plan view in the direction of the lens center axis 12. Its shape includes a center projection 36 that projects outward from the lens (in this embodiment, towards the lens anterior face) from the center section. A circumferential recess 38 constituted as a concave annular section that extends about the entire circumference to the outside of the center projection 36 and that is convex towards the lens exterior.

The center projection 36 gradually decreases in diameter dimension towards its projecting distal end, and at its projecting distal end section has a generally truncated conical shape on which a generally flat, projecting flat face 40 has been formed. In this embodiment, as will be discussed later, since the entire surface of the mark is a rough surface, the projecting flat face 40 may be viewed as a plane in which an average line in the lens radial cross section extends in a direction approximately orthogonal to the center axis 41 of the mark 34. According to the invention, the projecting flat face 40 will be formed with an outside diameter dimension of 0.02 mmϕ or larger, preferably 0.05 mmϕ or larger. If the outside diameter dimension of the projecting flat face 40 is smaller than 0.02 mmϕ, the center projection 36 will take on a pointed shape, posing the anxiety of catching on the eyelid etc. In preferred practice, the diameter dimension of the projecting flat face 40 will be made no larger than one-fifth the outside diameter dimension of the circumferential recess 38. If the diameter dimension of the projecting flat face 40 is larger than one-fifth the outside diameter dimension of the circumferential recess 38, the radial width dimension of the circumferential recess 38 will be relatively small, with the anxiety that the light scattering action produced by fine peaks and valleys (discussed later) thereon will not be adequately achieved. According to the invention, the outside diameter dimension of the projecting flat face 40 is 0.02 mmϕ with the contact lens 10 in the swelled condition. In the following description, unless indicated otherwise, the dimensions of the marks 34 and the indicia symbol 32 formed by a grouping thereof refer to dimensions with the contact lens 10 in the swelled condition.

In order to avoid catching on the eyelid etc., the projecting height dimension of the center projection 36 will preferably not exceed the maximum depth dimension of the circumferential recess 38 so that it does not protrude above the lens surface. In this embodiment, the projecting height dimension of the center projection 36 is 0.024 mm, which is equal to the groove depth dimension of the average face of a flat bottom face 42 of the circumferential recess 38, discussed later.

According to the invention, the circumferential recess 38 is of annular shape having circular inner and outer peripheral borders. The recess is formed with unchanging radial width dimension about the entire circumference to the outside of the center projection 36, and with a cross section of recessed shape opening toward the lens exterior. According to the invention, the outside diameter dimension of the circumferential recess 38 will be set to within a range between 0.1 mm and 0.5 mm, preferably between 0.2 mm and 0.3 mm. Specifically, if the outside diameter dimension of the circumferential recess 38 is smaller than 0.1 mm, the surface area of the circumferential recess 38 will be too small, with the anxiety that the effect of scattering incident light will not be effectively achieved, whereas if the outside diameter dimension of the circumferential recess 38 is larger than 0.5 mm, there is an anxiety of catching on the eyelid etc. In this embodiment, the outside diameter dimension of the mark 34 is 0.23 mm. As noted, this dimension refers to that with the contact lens 10 in swelled condition, and differs from the dimension on the die, discussed later. In this embodiment, the outside diameter dimension of the mark 34 on the die is 0.19 mm, for example.

The flat bottom face 42 defining the flat section is formed on the bottom face of the radially medial section of the circumferential recess 38, and about the entire circumference. Since the surface of the flat bottom face 42 is a rough surface, the flat bottom face 42 herein refers to a zone in which the depth variation of an average line in the lens radial cross section of the circumferential recess 38 is smaller than the depth variation at either side in the width direction, and in which the radius of curvature is greater. Preferably, the radius of curvature of the flat bottom face 42 will be greater by a factor of at least 10 than the minimum value of radius of curvature of the connecting sections with the side wall sections of the circumferential recess 38 at either side; and a substantially flat face having infinitely large radius of curvature would be acceptable as well. In this embodiment in particular, the flat bottom face 42 is defined by a zone through which an average line in the lens radial cross section of the circumferential recess 38 extends in a generally straight line in the radial direction of the mark 34; and the average face of the flat bottom face 42 is a flat surface. Here, the width dimension: PL of the flat bottom face 42 in the lens radial direction will preferably equal one-third or greater of the width dimension: L of the circumferential recess 38 in the lens radial direction, i.e., the width dimension L at the opening of the grooved contour of the circumferential recess 38 in the radial direction. If the width dimension of the flat bottom face 42 is smaller than one-third the width dimension of the circumferential recess 38, it will be difficult to ensure adequate surface area of the flat bottom face 42, with the anxiety that the effect of scattering incident light (discussed later) will not be effectively achieved. Furthermore, the flatness of the flat bottom face 42 will be 5 µm or less, preferably 2 µm or less. By so doing, deepening of the mark can be limited further. Herein, flatness refers to a value for a surface derived from an average surface of the rough surface. That is, it indicates variation in groove depth dimension on the average surface, and is expressed as the difference in depth dimension between the deepest point and the shallowest point. For example, where the flatness of the flat bottom face 42 is 5 µm, in the transverse cross section of the groove in which the rough surface is represented by an average surface, two points respectively having groove depth of -5 µm will be designated to either side in the width direction from the point of maximum depth, and the widthwise distance between these two points will be equal to one-third or greater of the opening width dimension of the groove. In this embodiment in particular, the radial width dimension: PL of the mark 34 of the flat bottom face 42 is 0.036 mm.

According to the invention, the groove depth dimension of the circumferential recess 38 in the average surface of the flat bottom face 42 will be set to within a range between 12 µm and 36 µm; in this embodiment, it is 24 µm. If the groove depth dimension is less than 12 µm, the circumferential recess 38 will be too shallow, and as a result the surface area of the circumferential recess 38 will be too small, posing an anxiety that the effect of scattering incident light (discussed later) will not be effectively achieved; on the other hand, if greater than 36 µm, there is anxiety that the circumferential recess 38 will be deep to the point that lens strength is diminished.

As a ring shape small projecting portion that projects towards the lens exterior about the entire circumference, an outer peripheral projection 44 is formed in the outside peripheral section of the circumferential recess 38. The outer peripheral projection 44 is of generally annular shape extending about the entire circumference with generally unchanging radial width dimension. According to the invention, the maximum height dimension: t of the outer peripheral projection 44 from the lens surface will preferably be set to no more than 1.8 µm in order to minimize contact pressure against the eye for good wear comfort; in this embodiment, it set to 1 µm.

The connecting section of the inner peripheral border of the circumferential recess 38 with the center projection 36, and the connecting section of the outer peripheral border of the circumferential recess 38 with the outer peripheral projection 44, each have a radial cross section of smoothly curving shape, with the center projection 36, the circumferential recess 38, and the outer peripheral projection 44 connecting smoothly to one another. Here, a radial cross section of smoothly curving shape refers to a cross sectional shape having gradually varying radius of curvature overall and devoid of inflection points, i.e. of turning points lacking a common tangent. In this embodiment, since the entire surface of the mark 34 is constituted as a rough surface, the radius of curvature of the average line of the rough surface in the radial cross section of the mark 34 will vary gradually, with no turning points.

Furthermore, in this embodiment the entire surface of the mark 34 is a rough surface having fine peak and valley contours formed thereon. The surface roughness of the rough surface may not be generally constant over the entire face of the mark 34; the projecting flat face 40 of the center projection 36, the flat bottom face 42 of the circumferential recess 38, and the outer peripheral projection 44 that has been formed in the outer peripheral section of the circumferential recess 38 have been given different surface roughness. According to the invention, the surface roughness of the flat bottom face 42, expressed as the Ra value, is at least 0.2 µm but not more than 5 µm. If the surface roughness Ra is less than 0.2 µm, the surface will not be substantially different from a slick, smooth surface and will transmit most of the light impinging on the flat bottom face 42 so that effective scattering of incident light is not achieved. The projecting flat face 40 of the center projection 36 and the outer peripheral projection 44 have lower surface roughness in comparison with the flat bottom face 42.

A plurality of marks 34 having the above construction are formed in a grouped condition spaced apart at prescribed intervals in the lens radial direction and in the lens circumferential direction to form the indicia symbol 32. Here, the distance separating mutually adjacent marks 34 will preferably be between one-third and twice the outside diameter dimension of the mark 34. If the gap between marks 34 is smaller than one-third the outside diameter dimension, the plurality of marks 34 will be grouped too closely together, posing the anxiety of catching on the eyelid etc. during blinking so that the lens will tend to rotate, as well as the anxiety of reduced lens strength due to the marks 34 being too close together; on the other hand, if the gap is greater than twice the outside diameter dimension, the marks 34 will be too far apart, posing the anxiety of being less recognizable as the indicia symbol 32. In this embodiment in particular, an indicia symbol 32 having rectangular shape is formed by a total of twelve marks 34 arranged in a 6 × 2 rows containing six marks 34 situated at equal intervals of approximately 0.08 mm in the lens radial direction (the vertical direction in FIG. 2) and two marks 34 situated at equal intervals of approximately 0.23 mm in the lens circumferential direction (the left-right direction in FIG. 2). It is not necessary for each of the marks 34 to be situated at equal intervals, and it would of course be possible for the marks 34 to be situated at irregular intervals.

The indicia symbol 32 is formed at a location that will not overlap the eyelid or the pupil during wear. Specifically, the marks 34 that make up the indicia symbol 32 will be formed in a region located in the anterior face peripheral zone 28, between 2.7 mm and 6.0 mm outwardly in the radial direction from the lens center axis 12 which is the lens center, so as to substantially avoid any effect on the optical characteristics of the lens.

Furthermore, the length dimension of the' mark 34 grouping area in the lens radial direction, in other words, the length dimension of the indicia symbol 32 in the lens radial direction, will be 2.2 mm or less, preferably 1.8 mm or less. If the length dimension of the indicia symbol 32 in the lens radial direction is greater than 2.2 mm, there is an anxiety of it overlapping the pupil; of catching on the eyelid and producing a sensation of a foreign body; or that the indicia symbol 32 will stand out to the point that appearance during wear suffers. The indicia symbol 32 in this embodiment has length dimension of 1.78 mm in the lens radial direction, and length dimension of 0.69 mm in the lens circumferential direction.

In the marked contact lens 10 of the above construction, when light impinges on the mark 34, since the entire face of the mark 34 is a rough surface, scattering of the incident light will be produced by the fine peak and valley contours on the rough surface. Thus, the surface of the mark 34 will take on a bright appearance overall, improving visibility. Moreover, since the surface is roughened, transmission of incident light will be reduced so that the scattering effect is produced more effectively. Additionally, due to the flat bottom face 42 being formed in the circumferential recess 38, a larger surface area for the circumferential recess 38 can be ensured, and thus a greater amount incident light can be captured so that the scattering effect is produced more effectively; moreover, the groove depth of the circumferential recess 38 can made shallower in comparison to the case where the flat bottom face 42 is not provided, thereby limiting deepening of the mark 34 and advantageously ensuring lens strength. Moreover, since the projecting flat face 40 of the center projection 36, the flat bottom face 42 of the circumferential recess 38, and the outer peripheral projection 44 have differing surface roughness, the light scattering effect will differ among them as well, thus giving rise to areas with different levels of visibility, so that visibility may be improved. Furthermore, due to the truncated conical shape of the center projection 36, the difference in the direction of light reflection by the projecting flat face 40 and by the inside peripheral wall of the circumferential recess 38 can be increased, thereby further improving visibility. In the same way, by forming the outer peripheral projection 44 on the outer peripheral section of the circumferential recess 38, the difference in the direction of light reflection by the circumferential recess 38 and by the outer peripheral projection 44 can be increased, thereby improving visibility.

Additionally, when light impinges on the mark 34, the shadow of the center projection 36 will be cast onto the circumferential recess 38. This will produce distinct contrast owing to the scattering of incident light on the circumferential recess 38 and the shadow of the center projection 36, improving the visibility of the mark 34 as a result.

In the marked contact lens 10, effective visibility can be achieved without enlargement or deepening of the marks 34. Moreover, since effective visibility can be achieved without enlargement of the marks 34, the indicia symbol 32 that is formed by grouping a plurality of marks 34 can be formed with effective visibility, while at the same time limiting enlargement. The indicia symbol 32 can thereby be made more compact, so that on the surface of a contact lens 10 having a limited area for depiction, the indicia symbol 32 can be smaller, or more indicia symbols 32 can be formed within a prescribed surface area, so that more information can be represented.

Furthermore, the connecting section of the inside peripheral border of the circumferential recess 38 with the center projection 36 formed in the mark 34, and the connecting section of the outside peripheral border of the circumferential recess 38 with the lens anterior face 14, each have radial cross section of smoothly curving shape in radial cross section. Catching on the eyelid, the cornea, etc. can be avoided thereby, thus advantageously reducing the anxiety of a sensation of a foreign object or of injury to the anterior of the eye due to increased irritation, as well as advantageously preventing rotation of the lens due to catching.

Next, a specific example of a method according to the invention used during manufacture of such a marked contact lens 10 will be described.

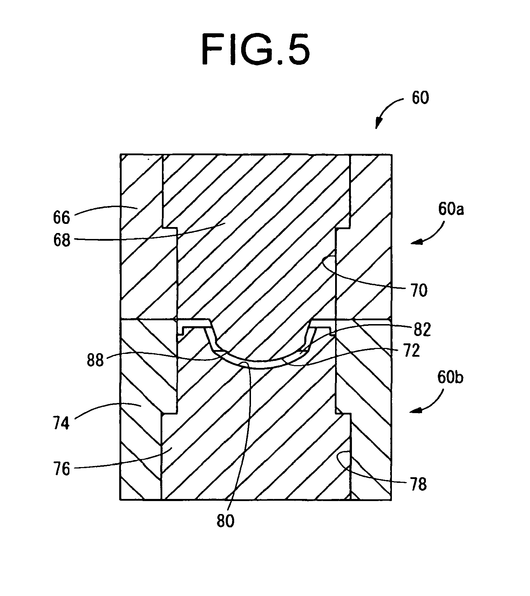

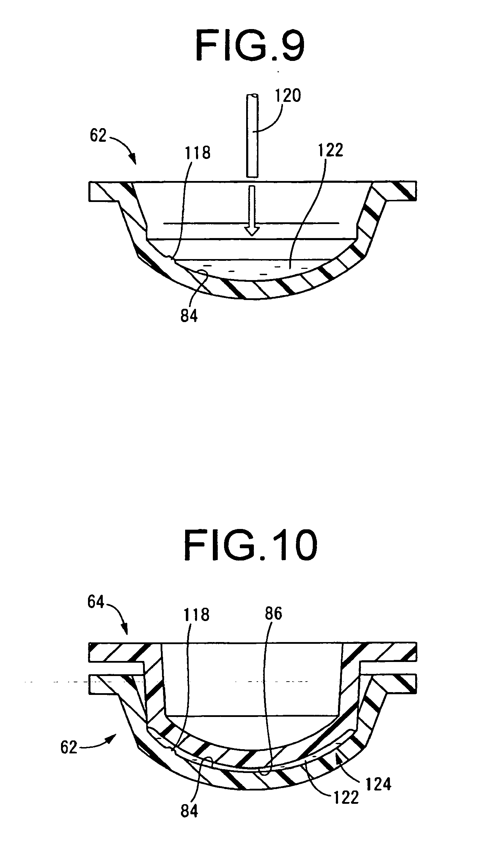

First, as depicted in FIG. 5, a female mold die 60 and a male mold die (not shown) are prepared as the mold dies. The male and female mold dies are used to manufacture independently a lens-molding resin female form 62 and a lens-molding resin male form 64, which cooperate to form a lens-molding resin mold (see FIG. 10), by means of known resin molding techniques. These resin male and female forms 62, 64 are prepared in order to produce the marked contact lens 10 through mold-forming (polymerization). These mold dies favorably employ stainless steel. aluminum, high speed steel, prehardened steel or the like suitable for laser machining, discussed later. However, other metal materials may be used. In this embodiment in particular, STAVAX (TM) is used.

FIG. 5 depicts the female mold die 60. The female mold die 60 is composed of a female molding upper die 60a and a female molding lower die 60b, mounted onto the fixed platen of a locking device, not shown. The female molding upper die 60a is composed of an upper die base 66 and an upper die core 68 that are respectively mounted fixedly on mounting plates (not shown) that are affixed to the fixed platen. The upper die base 66 has an oblong block shape, and is provided in its center section with an installation opening 70 passing through it in the mold mating direction. The upper die core 68 is installed fitting into the installation opening 70. A resin molding face 72 of convex spherical shape constituting a molding face is formed in the center section of the lower end face of the upper die core 68. This convex resin molding face 72 has a shape corresponding to the generally spherical convex shape of the lens anterior face 14 of the contact lens 10.

Meanwhile, the female molding lower die 60b is composed of a lower die base 74 and a lower die core 76 that are respectively mounted fixedly on mounting plates (not shown) affixed to the fixed platen. The lower die base 74 has an oblong block shape, and is provided in its center section with an installation opening 78 passing through it in the mold mating direction. The lower die core 76 is installed fitting into the installation opening 78. A resin molding face 80 of concave spherical shape is formed in the center section of the upper end face of the lower die core 76.

The female molding upper die 60a and the female molding lower die 60b are then closed in the axial direction (the vertical direction in FIG. 5) by the locking device (not shown), thereby forming a mold cavity 82 between the mating faces of the dies 60a, 60b. This mold cavity 82 is then filled with a thermoplastic resin material injected by an injection molding device (not shown) for example, and the resin is cooled and solidified. Examples of thermoplastic resin materials are polypropylene, polyethylene, polyethylene terephthalate, polystyrene, polycarbonate, vinyl chloride, nylon, polyacetal, fluororesin, and so on; while any of these may be used, polypropylene is used in this embodiment. The molded article of resin material is then removed by parting the dies 60a, 60b. The lens-molding resin female form 62 (see FIG. 10) is obtained thereby. Here, a concave spherical-shaped, lens-molding face 84 of the lens-molding resin female form 62 has been formed by the resin molding face 72 of the upper die core 68, thereby giving it a shape that corresponds to the lens anterior face 14 of the contact lens 10.

Meanwhile, like the female mold die 60, the male mold die is composed of a male molding upper die and a male molding lower die, with a mold cavity corresponding in shape to the lens-molding resin male form 64 (see FIG. 10) defined between the mating surfaces of the two dies; using the male mold die, the lens-molding resin male form 64 is molded by an operation similar to that for the female mold die 60. Since the construction of the male mold die is substantially identical to that of the female mold die 60, the male mold die has been omitted from the illustration here. Then, using a thermoplastic resin material and the male mold die, the lens-molding resin male form 64 will be obtained by a resin molding method similar to that for the lens-molding resin female form 62. Here, a convex spherical-shaped, lens-molding face 86 of the lens-molding resin male form 64 has been formed by the convex resin molding face of the upper die core, thereby giving it a shape that corresponds to the lens posterior face 16 of the contact lens 10.

According to the invention, engraved marks 88 serving as mark patterns are formed on the resin molding face 72 of the upper die core 68 of the female mold die 60 by means of laser machining at locations corresponding to the marks 34 of the contact lens 10, while the die is immersed in liquid.

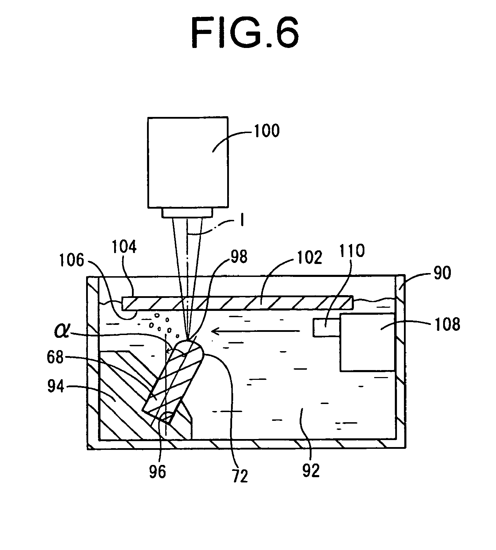

As depicted in model form in FIG. 6, in this embodiment, a tank 90 open at the top is filled with a liquid 92. While any of various liquids can be employed as the liquid 92, in this embodiment, distilled water is used so as to limit the reduction in energy of the laser beam caused by admixed impurities. Here, while no particular limitation is imposed as to the temperature of the liquid 92, in this embodiment it is set to normal temperature of between 20°C and 25°C.

A jig 94 for supporting the upper die core 68 is disposed within the tank 90. An insertion opening 96 that opens upward on the diagonal with respect to plumb vertical is formed in the jig 94, and the upper die core 68 is supported inserted into the insertion opening 96. By so doing, the upper die core 68 is supported on the jig 94, held with its axial direction inclined diagonally with respect to plumb vertical and with the resin molding face 72 facing up. In this embodiment in particular, the angle of incline: α of the axial direction of the upper die core 68 with respect to plumb vertical is α = 26°.

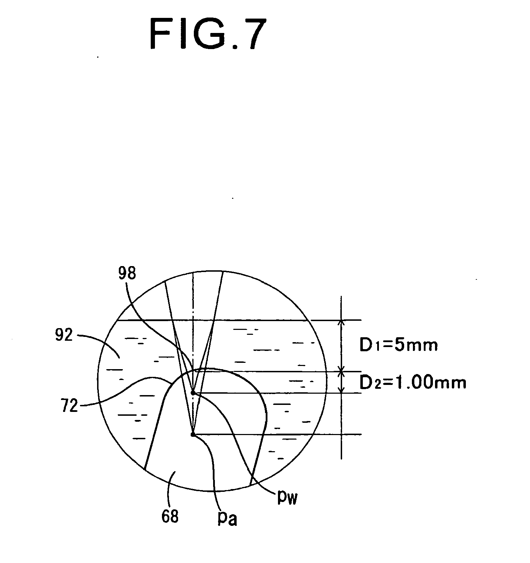

Furthermore, the entire upper die core 68 inclusive of the resin molding face 72 is submerged in the liquid 92; and as shown in FIG. 7, on the resin molding face 72, an irradiation site 98 constituting a location that corresponds to the desired marks 34 of the contact lens 10 is submerged in the liquid 92. In this embodiment in particular, as depicted in FIG. 7, the shape of the jig 94 and the depth of the liquid 92 have been adjusted such that the depth: D1 down to the irradiation site 98 from the surface of the liquid 92 is 5 mm.

A laser machining unit 100 is installed in the air above the upper die core 68 which has been supported on the jig 94. The laser used in this manufacturing method herein may be any of the various kinds of lasers suitable for machining of molds, for example, a YAG laser, a carbon dioxide laser, an excimer laser, a semiconductor laser or the like; it would also be favorable to employ a femtosecond laser that produces pulses of extremely short duration (10⁻¹⁵ s) so as to have less thermal effect on the workpiece than do other lasers. Any of the commercially available laser machining devices may be employed as the laser machining unit 100, for example, YVO₄ LASER MARKER MD-V9600 made by Keyence Co. Ltd. In this embodiment, a Class 4 YVO₄ laser is used as the laser; the laser has a wavelength of 1064 nm, Q switching frequency of 10 kHz, and output equal to 50% (3 W) of the YVO₄ LASER MARKER MD-V9600 made by Keyence Co. Ltd.

In preferred practice, the laser employed in the manufacturing method herein will be one producing a spot diameter of 0.05 mm or smaller; in this embodiment, a laser having a spot diameter of 0.04 mm is used. In the manufacturing method herein, since laser machining is carried out in liquid, the spot diameter of the laser is identified by the diameter at the irradiation site 98 on the submerged upper die core 68.

A glass plate 102 functioning as wave suppression plate is disposed on the surface of the liquid 92. The glass plate 102 is a light-transmissive component having a flat input face 104 and an output face 106; in this embodiment, BK7 with a diameter dimension of 32 mm and thickness of 6 mm is used. The glass plate 102 is immersed in the liquid 92 by one-third to one-half its thickness dimension. By so doing, the input face 104 will be positioned above the surface of the liquid and exposed to the air, while the output face 106 is submerged in liquid.

A filter pump 108 functioning as a water circulating unit is disposed on the inside face of the wall of the tank 90, on the side thereof opposite from the jig 94. The filter pump 108 may be any of those known in the prior art. Here, the height location of the spout 110 of the filter pump 108 is positioned at a height approximately equal to the height location of the irradiation site 98 of the upper die core 68 supported on the jig 94.

By driving the filter pump 108, a current of water is created in the liquid 92 between the resin molding face 72 and the glass plate 102, and flows from the spout 110 towards the upper die core 68 (from right to left in FIG. 6). Under these conditions, the laser light from the laser machining unit 100 will be directed with the optical axis: I aligned with the plumb vertical direction. After entering the input face 104 of the glass plate 102, the laser will pass through the glass plate 102 and exit from the output face 106, passing through the liquid 92 to irradiate the irradiation site 98 on the upper die core 68.

Here, as depicted in FIG. 7, since the laser light output by the laser machining unit 100 undergoes deflection as it enters the glass plate 102 and the liquid 92, the focal point location: Pw within the liquid 92 will be shifted upward as compared to the focal point location: Pa in air. Accordingly, in this embodiment, the focal point location: Pw within the liquid 92 will be set to one below the irradiation site 98, at a distance: D2 = 1.00 mm in the plumb vertical direction.

The laser output by the laser machining unit 100 is transmitted through the liquid 92 and scanned a prescribed number of times at prescribed pitch over the irradiation site 98, thereby inducing melting at the irradiation site 98 and producing at the irradiation site 98 an engraved mark 88 of annular shape corresponding to the shape of the mark 34.

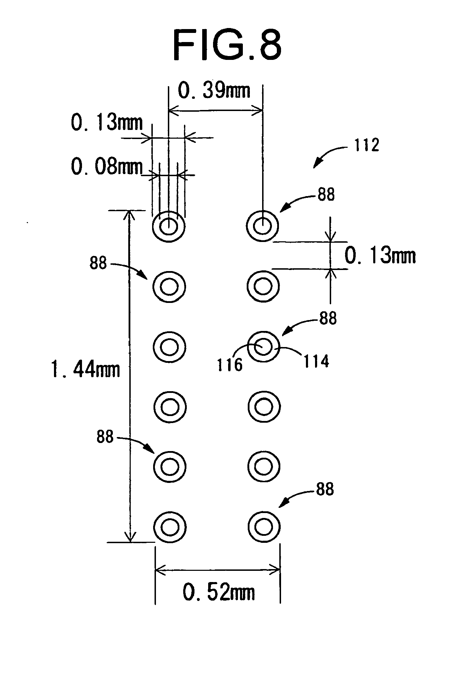

In this instance, the laser will preferably be scanned in the circumferential direction for two or more lines, and preferably for four or more lines, in the radial direction of the target engraved marks 88. By so doing, concave contours of annular shape corresponding to the circumferential recesses 38 of the marks 34 will be produced in the machined portions 114 (see FIG. 8) that have been scanned with the laser beam; and lands corresponding to the center projections 36 will be produced in the center non-machined areas 116 that were not scanned by the laser. By setting the number of scan lines to four or greater, melted zones created through laser machining and connecting between adjacent scan lines can be produced in succession, and flat contours corresponding to the flat bottom face 42 of the circumferential recess 38 can be produced advantageously, while endowing the flat bottom face 42 with radial width dimension adequate to effectively afford increased surface area of the circumferential recess 38 and prevent deepening of the marks 34. In this manufacturing method in particular, the number of laser scan passes is equivalent to five lines. In preferred practice, in the engraved marks 88, the outside diameter dimension of the machined portion 114 corresponding to the circumferential recess 38 will be set to within a range of between 0.1 and 0.5 mm. In this embodiment, the dimension is 0.13 mm. The scanning direction of the laser beam in the radial direction of the engraved marks 88 can be a single direction only, e.g. radially outward from the center of the engraved marks 88; or reciprocating scans can be carried out an appropriate number of times in the radial direction of the engraved marks 88.

The scan spacing of the laser beam is preferably such that the spacing of the center axis of the laser beam in the radial direction of the engraved marks 88 is smaller than the spot diameter of the laser beam, specifically, 0.03 mm or less and preferably 0.01 mm or less. In this method in particular, the center axis of the laser beam is scanned at intervals of 0.01 mm. By so doing, scanning can take place with the laser spot overlapping between adjacent scan lines, thereby reducing the anxiety that any unprocessed portions or ridges will remain at the scan line boundaries, so that flat contours corresponding to the flat bottom faces 42 can be formed advantageously.

In this way, engraved marks 88 serving as mark patterns having shape that corresponds to the marks 34 are produced on the resin molding face 72 of the upper die core 68 as depicted in FIG. 8. A plurality of these engraved marks 88 are produced by forming the contours of the engraved mark 88 at a prescribed plurality of sites on the resin molding face 72 of the upper die core 68, and an indicia symbol engraved mark 112 that corresponds to the indicia symbol 32 will be formed by the plurality of engraved marks 88.

In this method in particular, a total of twelve engraved marks 88 are created by producing the engraved marks 88 in groups of six in the radial direction of the resin molding face 72 (the vertical direction in FIG. 8) and in groups of two in the circumferential direction of the resin molding face 72 (the left-right direction in FIG. 8) at prescribed spacing. These engraved marks 88 form the indicia symbol engraved mark 112. Here, the outside diameter dimension of the engraved marks 88 is 0.13 mm, and the outside diameter dimension of the center non-machined area 116 that corresponds to the center projection 36 in the engraved marks 88 is 0.08 mm. The distance dimension between outer peripheral borders of the engraved marks 88 in the radial direction of the resin molding face 72 is 0.13 mm, while the distance dimension between center axes of the engraved marks 88 in the circumferential direction of the resin molding face 72 is 0.39 mm. Thus, the indicia symbol engraved mark 112 will have a dimension of 1.44 mm in the radial direction of the resin molding face 72, and a dimension of 0.52 mm in the circumferential direction of the resin molding face 72. The specific dimensions of the engraved marks 88 according to the method of this invention correspond to the dimensions of the marks 34 formed on the contact lens 10 that are described in claim 1.

In the course of resin molding of the lens-molding resin female form 62 using the female mold die 60 with the engraved marks 88 formed thereon, the engraved marks 88 that have been formed on the resin molding face 72 of the female mold die 60 will be transferred to the lens-molding face 84 of the lens-molding resin female form 62. As a result, mark projections 118 that correspond to the marks 34 will be formed on the lens-molding face 84 of the lens-molding resin female form 62, in sections thereof corresponding to the locations for forming the target marks 34 on the contact lens 10.

Next, the lens-molding resin female form 62 having the mark projections 118 formed thereon, and the lens-molding resin male form 64 that has been obtained through resin molding using the male mold die, are used to mold the target marked contact lens 10.

For this process, first, as depicted in FIG. 9, the lens-molding resin female form 62 is supported with its opening facing vertically upward; and through an injection tube 120, a polymerizable monomer 122 serving as the material for the contact lens 10 is injected into the tray-shaped zone formed by the concave lens-molding face 84. This polymerizable monomer 122 can be any of various appropriate liquid monomer compositions commonly used as materials for soft contact lenses or hard contact lenses. For example, compositions incorporating one or more types of radical polymerizable compounds, or composed of macromers or prepolymers could be used. The compounds may be optionally combined with appropriate crosslinking agents, sensitizers, thermal polymerization initiators, photopolymerization initiators, and so on. In this embodiment, a silicone-containing soft contact lens material is used.

Next, as depicted in FIG. 10, the lens-molding resin male form 64 is juxtaposed against and fitted into the lens-molding resin female form 62 in the axial direction (the vertical in FIG. 10) from vertically above the lens-molding resin female form 62, thereby defining a sealed mold cavity 124 that is filled with the polymerizable monomer 122. While maintaining the forms 62, 64 in the mated state, the polymerizable monomer 122 is subjected to a polymerization process. The polymerization process may be a photopolymerization process, thermal polymerization process, etc. selected appropriately according to the polymerizable monomer 122 being used.

After polymerizing the polymerizable monomer 122, the lens-molding resin female form 62 and the lens-molding resin male form 64 are parted and the polymerized molded article, namely the contact lens 10, is released from the mold to obtain the desired marked contact lens 10. Mold release of the contact lens 10 can be accomplished, for example, by inducing bending deformation of the lens-molding face 86 through squashing of the cylindrical portion of the lens-molding resin male form 64 in the axis-perpendicular direction so that the contact lens 10 adhering to the lens-molding face 86 of the parted lens-molding resin male form 64 is released from the lens-molding face 86; or by release using an appropriate chemical product.

In the contact lens 10 that has been polymerization-molded and released from the mold in the above manner, the lens anterior face 14 has been shaped by the contours of the lens-molding face 84 of the lens-molding resin female form 62, while the lens posterior face 16 has been shaped by the contours of the lens-molding face 86 of the lens-molding resin male form 64. The engraved marks 88 that were formed on the resin molding face 72 of the upper die core 68 that makes up the female mold die 60 were transferred as mark projections 118 to the lens-molding face 84 of the lens-molding resin female form 62, and in turn the mark projections 118 have been transferred to the lens anterior face 14 of the contact lens 10, thereby forming concave marks 34 of contours corresponding to the engraved marks 88, at the desired locations in the peripheral zone of the contact lens 10, with the plurality of marks 34 making up the indicia symbol 32.

According to this manufacturing method of the invention, through laser machining carried out in a liquid, rough surfaces having fine peak and valley contours can be formed on the surfaces of the engraved marks 88, and hence on the surfaces of the marks 34, so that the rough surfaces can be formed with a high degree of surface roughness. Thus, it will be possible for scattering of light to be effectively produced at the surface of the marks 34, improving visibility. At the same time, uplift of the outer peripheral edges of the engraved marks 88, and accordingly uplift of the outer peripheral projections 44 situated at the outer peripheral borders of the marks 34, can be kept to a minimum. Contact pressure against the eyelid can be minimized thereby, and good wear comfort can be achieved.

While the scientific basis for the fact that the engraved marks 88 can be formed with a high degree of surface roughness while limiting uplift of their outer peripheral edges where laser machining is carried out with the irradiation site 98 submerged in the liquid 92 is not entirely clear, it is not an object of this invention to elucidate the scientific basis; however, in relation to the ability to produce a high degree of surface roughness, it is thought that the fact that the process takes place in liquid means that evolution of heat in the vicinity of the focal point location will be limited so that melting takes place intensively at the focal point location, and that redeposition of swarf produced by laser processing onto the irradiation site 98 will be limited, thereby avoiding any reduction in energy density of the laser beam caused by swarf. With regard to why uplift of their outer peripheral edges is limited, it is thought that the fact that the process takes place in liquid means that there will be less bulging at the outer peripheral border of the engraved marks 88 due to thermal deformation, owing to reduced evolution of heat in the vicinity of the irradiation site 98.

The filter pump 108 creates a current of water flowing approximately orthogonal to the laser beam irradiation axis: I between the irradiation site 98 and the glass plate 102. Thus, during laser machining, air bubbles and swarf produced at the irradiation site 98 during laser machining will be carried away from on the laser beam irradiation axis: I by the current of water. It will therefore be possible to reduce the anxiety of the laser beam hitting a location different from the intended location due to deflection caused by interference of the laser beam with air bubbles, and of reduced energy of the laser beam due to swarf, so that better machining accuracy may be achieved. Furthermore, since swarf is carried away by the current, better washing action can be achieved as well.

Additionally, in this mode, the glass plate 102 is positioned on the surface of the liquid 92 so that the laser beam will enter the flat input face 104 of the glass plate 102. Thus, deflection of the laser beam in a direction other than the intended one due to waves forming on the surface of the liquid 92 can be limited, and better machining accuracy may be achieved. In this mode in particular, while waves are more likely to form on the surface of the liquid 92 due to the use of the filter pump 108, by providing the glass plate 102 it is possible to advantageously avoid the effects of waves.

In this manufacturing method, the engraved marks 88 are produced on the female mold die 60 through laser machining, and the engraved marks 88 are then transferred to the lens anterior face 14 through the agency of the lens-molding resin female form 62. For this reason, even where contact lenses 10 furnished with marks 34 are manufactured in large quantities, the labor entailed by laser machining of each individual contact lens 10 can be avoided, and productivity can be improved. Moreover, in this manufacturing method, by carrying out laser machining in liquid, swarf produced during laser machining can be prevented from becoming deposited on the die, obviating the need for a washing process to remove the swarf, so that better production efficiency is afforded.

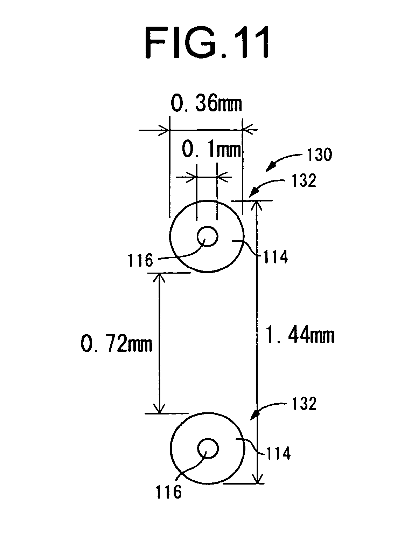

For example, according to a second specific example of a manufacturing method according to the present invention, it would be possible to form an indicia symbol engraved mark 130 and engraved marks 132 constituting it, like those depicted in FIG. 11. In the following description, elements substantially like those of the embodiment and method hereinabove are assigned like symbols and will not be described in any detail.

Two engraved marks 132 are formed lined up and spaced apart by a prescribed distance in the radial direction of the resin molding face 72 on the resin molding face 72 of the upper die core 68; the indicia symbol engraved mark 130 is composed of these two engraved marks 132.

To describe in detail, these two engraved marks 132 have mutually similar shape, with each engraved mark 132 differing in size from the engraved marks 88 described in the preceding manufacturing method, but similar in shape to the engraved marks 88. Specifically, the engraved marks 132 have a machined portion 114 of annular concave shape of contours similar to the engraved marks 88 described earlier, formed by scanning of the laser in the circumferential direction; and in the center section of the machined portion 114, a center non-machined area 116 not scanned by the laser.

In this manufacturing method in particular, the outside diameter dimension of the engraved marks 132 is 0.36 mm and the outside diameter dimension of the center non-machined areas 116 is 0.1 mm. Two of these engraved marks 132 are formed with their outermost peripheral edge portions space apart from one another by a distance of 0.72 mm in the radial direction of the resin molding face 72 (the vertical direction in FIG. 11). Thus, in this manufacturing method, the dimension of the indicia symbol engraved mark 130 in the radial direction of the resin molding face 72 will be 1.44 mm.

Additionally, whereas in the preceding embodiment, contact against the cornea was avoided by forming the marks 34 on the lens anterior face 14, no limitation is imposed that the marks of the present invention must be formed on the lens anterior face, and it would be possible to form them on the lens posterior face instead.

The present invention is not necessarily limited to toric lenses, and may be utilized for the purpose of indicating circumferential position in a bifocal lens or other lens that, like a toric lens, requires positioning in the circumferential direction; or where the marks of the present invention are employed for the purpose of identifying whether a lens is for use in the right or left eye, they may be utilized in a single focus lens as well.

Furthermore, in the manufacturing methods described above, while a mode employing a combination of a glass plate 102 and a filter pump 108 was shown by way of example, it would of course be possible to employ either the glass plate 102 or a filter pump 108 without the other. Also, no particular limitation is imposed regarding the specific construction of the water circulating unit. For example, instead of using pressure means such as the above filter pump 108 as the water circulating unit, a motor of waterproof construction could be installed in the tank 90, a screw attached to the output shaft of the motor, and the water circulated by turning of the screw.

The method for producing the mark pattern on the forming die according to this invention is limited to laser machining as described above. Other processes not part of the invention employ a so-called chemical etching process whereby the forming die is fabricated from steel, electroless nickel, etc., and with the forming die immersed in sodium chloride solution or the like, one electrode is hooked up to the forming die, while another electrode is disposed in proximity to the surface of the forming die on which the mark pattern is to be formed, and electrical current is then applied thereby giving rise to chemical etching of the mark pattern into the surface of the forming die.

### [EXAMPLE 1]

Example 1 below describes an experiment conducted for the purpose of demonstrating the technological advantages of contact lenses according to the present invention.

First, two STAVAX (TM) female forming dies were prepared, and in accordance with the manufacturing method described above, a mark pattern (see FIG. 8) was produced on one of the female forming dies by way of a first manufacturing method, and a mark pattern (see FIG. 11) was produced on the other female forming die by way of a second manufacturing method. Both of the female forming dies were forming dies for soft contact lenses having a base curve radius of curvature (B. C.) of 8.6 mm on the lens posterior face, lens strength (diopter) of -3.00 in the optical zone, and lens outside diameter (DIA) of 14.0 mm.

Designating the mark pattern produced according to the first manufacturing method and the marks formed by transfer of this mark pattern as Example 1a, and designating the mark pattern produced according to the second manufacturing method and the marks formed by transfer of this mark pattern as Example 1b, the marks formed on the contact lens surfaces were subjected to surface examination using a differential interference microscope and to depth measurement using a scanning probe microscope (AFM), while the cross section of the mark patterns formed in the female forming dies was subjected to surface examination using a scanning electron microscope (SEM). The differential interference microscope was an ECLIPS600 by Nikon; the scanning probe microscope was an SPI3800N/SPA300 by Seiko Instruments; and the scanning electron microscope was a JSM-5410LV by JEOL.

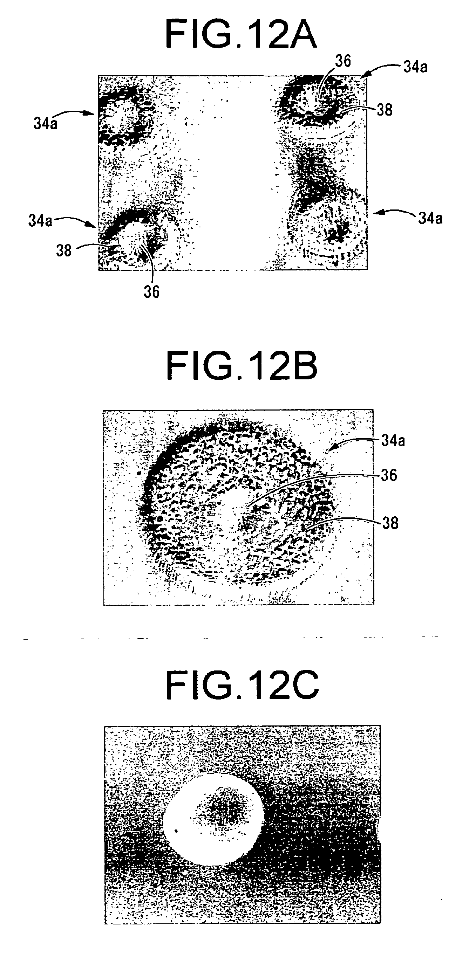

FIG. 12 (a) shows the results of surface examination by differential interference microscope of marks 34a in Example 1a; FIG. 12 (b) shows the results of surface examination by differential interference microscope of marks 34b in Example 1b. By way of a comparative example, FIG. 12 (c) shows the results of surface examination by differential interference microscope of marks produced using a collimating laser such as YAG in accordance with a conventional manufacturing technique. As will be apparent from FIG. 12 (a) and (b), the manufacturing methods according to the present invention and the marks produced in accordance therewith have a circumferential recess 38 (convex annular section) and a center projection 36. The surfaces of the marks, and particularly the surface of the circumferential recess 38, are rough surfaces having fine peak and valley contours resembling a grainy texture. In contrast, it can be seen from FIG. 12 (c) that the marks produced by the conventional manufacturing technique have slick surfaces whose surfaces are smooth.

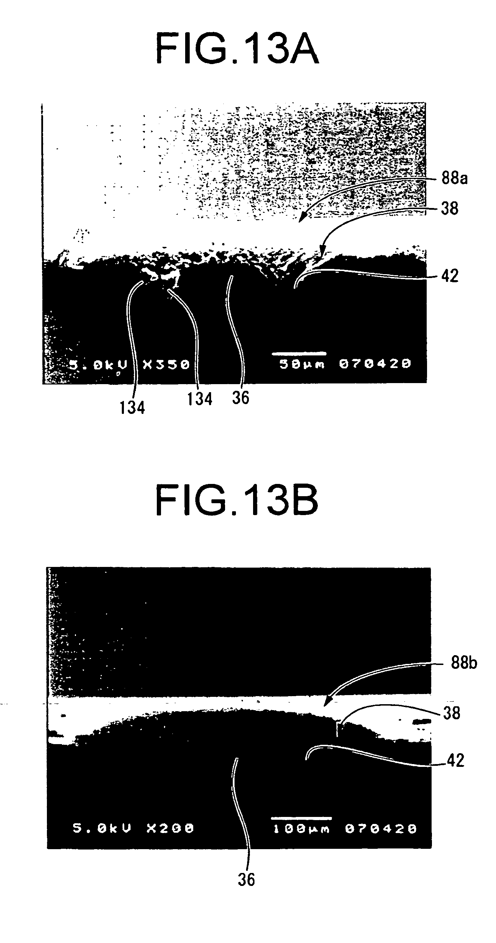

FIG. 13 (a) depicts a cross section in the radial direction of an engraved mark 88 as a mark pattern on the die of Example 1a, taken through surface examination by scanning electron microscope (SEM); and FIG. 13 (b) depicts a cross section in the radial direction of an engraved mark 88 as a mark pattern on the die of Example 1b, taken through surface examination by scanning electron microscope (SEM). As will be apparent from FIG. 13 (a) and (b), the mark patterns according to the present invention have a circumferential recess 38 of concave shape and a center projection 36 of convex shape. It can be seen that a flat bottom face 42 is formed on the bottom face of the circumferential recess 38, thereby limiting deepening of the mark. The gouge-like groove 134 formed on the bottom face of the circumferential recess 38 in FIG. 13 (a) is a burr that formed during cutting.

Scanning probe microscope (AFM) measurements of depth dimension of marks produced on the contact lenses gave a result of 18.8 µm for the mark of Example 1a, and 22.4 µm for the mark of Example 1b.

### [EXAMPLE 2]

**[TABLE 1]**

| Evaluation item | Class | Description |
|---|---|---|
| Lens rotation, position shift | ○ | Lens rotation, position shift not observed in any examined eye |
| | △ | Lens rotation, position shift observed in <20% of examined eyes |
| | × | Lens rotation, position shift observed in ≥20% of examined eyes |
| Visibility to examiner | ○ | No lack of visibility observed in any examined eye |
| | △ | Lack of visibility observed in <20% of examined eyes |
| | × | Lack of visibility observed in ≥20% of examined eyes |
| Visibility to wearer | ○ | No lack of visibility observed in any examined eye |
| | △ | Lack of visibility observed in <20% of examined eyes |
| | × | Lack of visibility observed in ≥20% of examined eyes |

**[TABLE 2]**

| Evaluation item | Mark outside dia. (mm) × number of marks | | | | |
|---|---|---|---|---|---|
| | 0.60mm × 2 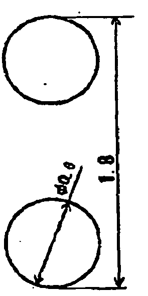 | 0.50mm × 2 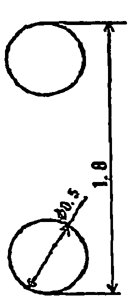 | 0.40mm × 3 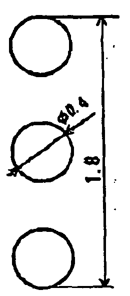 | 0.30mm × 4 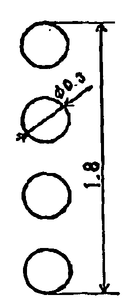 | 0.20mm × 6 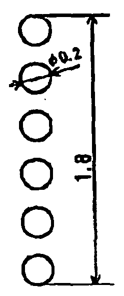 |
| Lens rotation, position shift | × | △ | ○ | ○ | ○ |
| Visibility to examiner | ○ | ○ | ○ | ○ | ○ |
| Visibility to wearer | △ | △ | △ | ○ | ○ |

Next, with the length dimension in the lens radial direction of indicia symbols formed by groupings of marks set to a fixed value of 1.8 mm, and the distance from the lens center to the lower end of the indicia symbol (the radially outer edge of the lens) set to a fixed value of 5.0 mm, the items indicated in Table 1 were evaluated while varying the radial dimension of the marks. For each item, results of evaluation carried out on 100 examined eyes of 50 subjects are shown in FIG. 2. While the marks are depicted as circular in Table 2, this is done for simplicity in illustration; the actual marks used in the evaluations have a center projection.

As will be apparent from Table 2, the marks according to the present invention were observed to give good results with outside diameter dimensions within the range of between 0.2 mm and 0.5 mm. In particular, good results for all evaluated items were obtained at outside diameter dimensions within the range of between 0.2 mm and 0.3 mm, thus demonstrating that outside diameter dimensions of between 0.2 mm and 0.3 mm are particularly favorable for the marks according to the present invention.

### [EXAMPLE 3]

**[TABLE 3]**

| Evaluation item | Class | Description |
|---|---|---|
| Anterior eye problems (hyperemia of the palpebral conjuctiva, lacrimal papilla hypertrophy) | ○ | No cases of aggravation |
| | △ | Cases of aggravation observed, but none to an extent making wear impossible |
| | × | Cases of aggravation to an extent making wear impossible observed |
| Lens rotation, position shift | ○ | Lens rotation, position shift not observed in any examined eye |
| | △ | Lens rotation, position shift observed in <20% of examined eyes |
| | × | Lens rotation, position shift observed in ≥20% of examined eyes |
| Visibility to examiner | ○ | No lack of visibility observed in any examined eye |
| | △ | Lack of visibility observed in <20% of examined eyes |
| | × | Lack of visibility observed in ≥20% of examined eyes |
| Visual field impairment (effect on sight) | ○ | No effect on sight observed in any examined eye |
| | △ | Effect on sight observed in <20% of examined eyes |
| | × | Effect on sight observed in ≥20% of examined eyes |
| Visibility to wearer | ○ | No lack of visibility observed in any examined eye |
| | △ | Lack of visibility observed in <20% of examined eyes |
| | × | Lack of visibility observed in ≥20% of examined eyes |

**[TABLE 4]**

| Mark shape | Evaluation item | Distance from lens center to mark lower edge (mm) | | | | | | | |
|---|---|---|---|---|---|---|---|---|---|
| | | 7 | 6.5 | 6 | 5.5 | 5 | 4.5 | 4 | 3.5 |
| With center projection | Anterior eye problems | × | △ | ○ | ○ | ○ | ○ | ○ | ○ |
| | Lens rotation, position shift | ○ | ○ | ○ | ○ | ○ | ○ | △ | × |
| | Visibility to examiner | × | △ | ○ | ○ | ○ | ○ | ○ | ○ |
| | Visual field impairment | ○ | ○ | ○ | ○ | ○ | ○ | △ | × |
| | Visibility to wearer | ○ | ○ | ○ | ○ | ○ | ○ | △ | × |
| Without center projection | Anterior eye problems | × | △ | ○ | ○ | ○ | ○ | ○ | ○ |
| | Lens rotation, position shift | ○ | ○ | ○ | △ | △ | × | × | × |
| | Visibility to examiner | × | × | △ | ○ | ○ | ○ | ○ | ○ |
| | Visual field impairment | ○ | ○ | ○ | ○ | ○ | ○ | △ | × |
| | Visibility to wearer | ○ | ○ | ○ | ○ | △ | × | × | × |

Next, for marks of shape according to the present invention and, by way of a comparative example, for marks lacking a center projection, the items indicated in Table 3 were evaluated at different mark formation locations in the lens radial direction. For each item, results of evaluation carried out on 100 examined eyes of 50 subjects are shown in FIG 4.

As will be apparent from Table 4, at all formation locations, marks of shape according to the present invention, provided with a center projection, afforded evaluation results equal to or better than the marks of the comparative example lacking a center projection. Particularly good results were obtained where the formation location of the lower end of the mark was within a range of between 4.5 mm and 6.0 mm from the lens center. From the above it will be appreciated that marks of construction according to the present invention provided with a center projection afford good results for each evaluated item, as well as improved freedom in selecting the mark formation location.

## Claims

1. A contact lens (10) having a mark (34) on at least one of an anterior face (14) and a posterior face (16) thereof, wherein:
the mark (34) is defined by a concave annular section (38) having inside and outside peripheral borders of circular shape, and a center projection (36) situated in a center of the concave annular section (38);
an outside diameter dimension of the concave annular section (38) is within a range of 0.1-0.5mm;
a widthwise center section of the concave annular section (38) in radial cross section is a flat section (42) having smaller depth change and greater radius of curvature than widthwise side sections; and
at least the flat section (42) of the mark (34) has a rough surface, **characterized in that**:
the radius of curvature of the flat section (42) is greater by a factor of 10 or more than a minimum value of radius of curvature of connecting sections with side wall sections at either side of the flat section (42);
a distal end face of the center projection (36) has an outside diameter dimension of a size equal to 0.02 mm or greater;
the outside peripheral section of the concave annular section (38) is imparted about an entire circumference with a rough surface having smaller degree of surface roughness than the rough surface of the flat section (42) of the concave annular section (38);
a groove depth in the radial cross section of the concave annular section (38) is held within a range of 12-36 µm at an average face of the flat section (42);
the rough surface of the flat section (42) in the concave annular section (38) has an Ra value that is held within a range of 0.2 µm - 5 µm; and
a ring-shaped small projecting portion (44) of 1.8 µm or less in height is formed in the outside peripheral section of the concave annular section (38).

2. The contact lens (10) according to claim 1, wherein on a grooved contour of the radial cross section of the concave annular section (38), the flat section (42) is formed on a bottom portion thereof with a width dimension (PL) equal to one-third or more of a width dimension (L) of an opening of the grooved contour, and with a flatness of the flat section (42) being 5µm or less.

3. The contact lens (10) according to claim 1, wherein the distal end face of the center projection (36) has a rough surface of a degree of surface roughness smaller than the rough surface of the flat section (42) of the concave annular section (38).

4. The contact lens (10) according to any one of claims 1-3, wherein a connecting section of an inside peripheral border of the concave annular section (38) with the center projection (36), and a connecting section of an outside peripheral border of the concave annular section (38) with an outside peripheral section of the concave annular section (38), have smoothly curving shape in radial cross section, respectively.

5. The contact lens (10) according to any one of claims 1-4, wherein a plurality of marks (34) are formed in a grouped arrangement.

6. The contact lens (10) according to claim 5, wherein:
the grouping area in the mark (34) has a size of 2.2 mm or smaller in a radial direction of the lens; and
a distance separating the plurality of the marks (34) from one another is equivalent to between one-third and twice an outside diameter dimension of the mark (34).

7. A method of manufacturing a contact lens (10) having a mark (34) formed on at least one of an anterior face (14) and a posterior face (16) of the contact lens (10), the mark (34) being produced simultaneously with mold forming of the contact lens (10) in a lens molding cavity defined by a lens-molding resin mold (62, 64) which has been produced by a mold die (60), through transfer of a mark pattern (88) that has been formed in the mold die (60) to the lens-molding resin mold (62, 64) and subsequent re-transfer thereof to the contact lens (10), the method comprising the step of:
producing the mark pattern (88) that includes a concave annular section (38) having circular inner and outer peripheral borders and a center projection (36) situated to a center of the concave annular section (38) by engraving the concave annular section (38) into the mold die (60) using a laser beam, while submerged in a liquid (92), such that an outside diameter dimension of the concave annular section (38) is within a range of 0.1-0.5mm; a width wise center section of the concave annular section (38) in radial cross section is a flat section (42) having smaller depth change and greater radius of curvature than widthwise side sections; and at least the flat section (42) of the mark (34) has a rough surface, **characterised in that**:
the radius of curvature of the flat section (42) is greater by a factor of 10 or more than a minimum value of radius of curvature of connecting sections with side wall sections at either side of the flat section (42);
a distal end face of the center projection (36) has an outside diameter dimension of a size equal to 0.02 mm or greater;
the outside peripheral section of the concave annular section (38) is imparted about an entire circumference with a rough surface having smaller degree of surface roughness than the rough surface of the flat section (42) of the concave annular section (38);
a groove depth in the radial cross section of the concave annular section (38) is held within a range of 12-36 µm at an average face of the flat section (42);
the rough surface of the flat section (42) in the concave annular section (38) has an Ra value that is held within a range of 0.2 µm - 5 µm; and
a ring-shaped small projecting portion (44) of 1.8 µm or less in height is formed in the outside peripheral section of the concave annular section (38).

8. The method of manufacturing a contact lens (10) according to claim 7, wherein:
the mark pattern (88) in the mold die (60) is formed with a shape such that an outside diameter dimension of the concave annular section (38) is held within a range of 0.1-0.5 mm, and a widthwise center section of the concave annular section (38) in radial cross section constitutes a flat section (42) having smaller depth change and greater radius of curvature than widthwise side sections; and
the laser beam comprises a laser beam with spot diameter of 0.05 mm or smaller.

9. The method of manufacturing a contact lens (10) according to claim 7 or 8, wherein the mark pattern (88) is formed through scanning of the laser beam in a circumferential direction by an equivalent of two or more scan lines in a radial direction.

10. The method of manufacturing a contact lens (10) according to claim 9, wherein, during scanning of the laser beam, a spacing of scans of the laser beam at a center axis thereof in the radial direction of the mark pattern (88) is smaller than a spot of the laser beam.

11. The method of manufacturing a contact lens (10) according to any one of claims 7 to 10, wherein the mark (34) is formed simultaneously with molding of the lens using a lens-molding resin mold (62, 64) that has been produced with a mold die (60), by means of transferring a mark pattern (88) that has been formed in the mold die (60) to the lens-molding resin mold (62, 64), and subsequent re-transfer thereof to the lens; and the mark pattern (88) in the mold die (60) is formed through scanning of a laser beam in a circumferential direction over a width equivalent to two or more scan lines in a radial direction.

12. The method of manufacturing a contact lens (10) according to claim 11, wherein the laser beam used to form the mark pattern (88) on the mold die (60) has a spot diameter of 0.05 mm or less.

13. The method of manufacturing a contact lens (10) according to claim 11 or 12, wherein:
the mark pattern (88) is formed through scanning of the laser beam along two or more scan lines in the radial direction of the mark pattern (88), with a center axis of the laser beam positioned at intervals of 0.03 mm or less;
the mark pattern (88) is formed by scanning the laser beam along four or more scan lines in the radial direction of the mark pattern (88);
the mark pattern (88) on the mold die (60) has been formed through irradiation with the laser beam while submerged in a liquid (92); and
the mark (34) is situated in a peripheral zone (24) formed surrounding an optical zone (22) of the lens, and is formed in zone between 2.7 mm and 6.0 mm radially outward from a lens center (12).

## Patentansprüche

1. Kontaktlinse (10), die auf ihrer Vorderseite (14) und/oder ihrer Rückseite (16) eine Markierung (34) aufweist, wobei:
die Markierung (34) durch einen konkaven ringförmigen Abschnitt (38) definiert ist, der innere und äußere Randgrenzen von runder Form und einen mittleren Vorsprung (36), der sich in einer Mitte des konkaven ringförmigen Abschnitts (38) befindet, aufweist;
eine Abmessung des äußeren Durchmessers des konkaven ringförmigen Abschnitts (38) im Bereich von 0,1-0,5 mm liegt;
ein Mittelabschnitt in Breitenrichtung des konkaven ringförmigen Abschnitts (38) im radialen Querschnitt ein flacher Abschnitt (42) ist, der eine kleinere Tiefenänderung und einen größeren Krümmungsradius aufweist als die Seitenabschnitte in Breitenrichtung; und
wenigstens der flache Abschnitt (42) der Markierung (34) eine raue Oberfläche aufweist, **dadurch gekennzeichnet, dass**:
der Krümmungsradius des flachen Abschnitts (42) um einen Faktor 10 oder mehr größer ist als ein Minimalwert des Krümmungsradius von Verbindungsabschnitten mit Seitenwandabschnitten an jeder Seite des flachen Abschnitts (42);
eine entfernte Endfläche des mittleren Vorsprungs (36) eine Abmessung des Durchmessers mit einer Größe, die gleich oder größer als 0,02 mm ist, aufweist;
der äußere Randabschnitt des konkaven ringförmigen Abschnitts (38) um einen vollständigen Umfang mit einer rauen Oberfläche versehen ist, die einen kleineren Grad von Oberflächenrauheit aufweist als die raue Oberfläche des flachen Abschnitts (42) des konkaven ringförmigen Abschnitts (38);
eine Rillentiefe in dem radialen Querschnitt des konkaven ringförmigen Abschnitts (38) an einer durchschnittlichen Fläche des flachen Abschnitts (42) in einem Bereich von 12-36 µm gehalten wird;
die raue Oberfläche des flachen Abschnitts (42) in dem konkaven ringförmigen Abschnitt (38) einen Ra-Wert aufweist, der in dem Bereich von 0,2-5 µm liegt; und
ein ringförmiger kleiner vorspringender Abschnitt (44) mit einer Höhe von 1,8 µm oder weniger im äußeren Umfangsabschnitt des konkaven ringförmigen Abschnitts (38) gebildet ist.

2. Kontaktlinse (10) nach Anspruch 1, wobei auf einer rillenförmigen Kontur des radialen Querschnitts des konkaven ringförmigen Abschnitts (38) der flache Abschnitt (42) auf einem unteren Abschnitt davon mit einer Breitenabmessung (PL), die gleich einem Drittel oder mehr einer Breitenabmessung (L) einer Öffnung der rillenförmigen Kontur ist, gebildet ist und wobei eine Flachheit des flachen Abschnitts (42) 5 µm oder kleiner ist.

3. Kontaktlinse (10) nach Anspruch 1, wobei die entfernte Endfläche des mittleren Vorsprungs (36) eine raue Oberfläche mit einem Grad von Oberflächenrauheit aufweist, der kleiner ist als die raue Oberfläche des flachen Abschnitts (42) des konkaven ringförmigen Abschnitts (38).

4. Kontaktlinse (10) nach einem der Ansprüche 1-3, wobei ein Verbindungsabschnitt einer inneren Randgrenze des konkaven ringförmigen Abschnitts (38) mit dem mittleren Vorsprung (36) und ein Verbindungsabschnitt einer äußeren Randgrenze des konkaven ringförmigen Abschnitts (38) mit einem äußeren Randbereich des konkaven ringförmigen Abschnitts (38) im radialen Querschnitt jeweils eine gleichmäßig gekrümmte Form aufweisen.

5. Kontaktlinse (10) nach einem der Ansprüche 1-4, wobei mehrere Markierungen (34) in einer gruppierten Anordnung gebildet sind.

6. Kontaktlinse (10) nach Anspruch 5, wobei:
der Gruppierungsbereich in der Markierung (34) in radialer Richtung der Linse eine Größe von 2,2 mm oder kleiner aufweist; und
ein Abstand, der die mehreren Markierungen (34) voneinander trennt, zwischen einem Drittel und dem Zweifachen einer Abmessung des äußeren Durchmessers der Markierung (34) entspricht.

7. Verfahren zum Herstellen einer Kontaktlinse (10), die eine Markierung (34) aufweist, die auf einer Vorderseite (14) und/oder einer Rückseite (16) der Kontaktlinse (10) gebildet ist, wobei die Markierung (34) gleichzeitig mit der Gussbildung der Kontaktlinse (10) in einem Linsengusshohlraum, der durch eine Linsengussharzgussform (62, 64) gebildet ist, die durch eine Gussmatrize (60) hergestellt wurde, durch das Übertragen eines Markierungsmusters (88), das in der Gussmatrize (60) gebildet wurde, auf die Linsengussharzgussform (62, 64) und nachfolgendes Rückübertragen davon auf die Kontaktlinse (10) hergestellt wird, wobei das Verfahren den Schritt umfasst:
Herstellen des Markierungsmusters (88), das einen konkaven ringförmigen Abschnitt (38) umfasst, der runde innere und äußere Umfangsränder und einen mittleren Vorsprung (36), der sich in einer Mitte des konkaven ringförmigen Abschnitts (38) befindet, aufweist, durch Gravieren des konkaven ringförmigen Abschnitts (38) mit Hilfe eines Laserstrahls in die Gussmatrize (60), während sie in einer Flüssigkeit (92) eingetaucht ist, so dass eine Abmessung des äußeren Durchmessers des konkaven ringförmigen Abschnitts (38) innerhalb des Bereichs von 0,1-0,5 mm liegt; wobei ein Mittelabschnitt in Breitenrichtung des konkaven ringförmigen Abschnitts (38) im radialen Querschnitt ein flacher Abschnitt (42) ist, der eine kleinere Tiefenänderung und einen größeren Krümmungsradius aufweist als die Seitenabschnitte in Breitenrichtung; und wenigstens der flache Abschnitt (42) der Markierung (34) eine raue Oberfläche aufweist, **dadurch gekennzeichnet, dass**:
der Krümmungsradius des flachen Abschnitts (42) um einen Faktor 10 oder mehr größer ist als ein Minimalwert des Krümmungsradius von Verbindungsabschnitten mit den Seitenwandabschnitten an jeder Seite des flachen Abschnitts (42);
eine entfernte Endfläche des mittleren Vorsprungs (36) eine Abmessung des äußeren Durchmessers mit einer Größe, die gleich oder größer als 0,02 mm ist, aufweist;
der äußere Randabschnitt des konkaven ringförmigen Abschnitts (38) um einen vollständigen Umfang mit einer rauen Oberfläche versehen ist, die einen kleineren Grad von Oberflächenrauheit aufweist als die raue Oberfläche des flachen Abschnitts (42) des konkaven ringförmigen Abschnitts (38);
eine Rillentiefe in dem radialen Querschnitt des konkaven ringförmigen Abschnitts (38) an einer durchschnittlichen Fläche des flachen Abschnitts (42) in einem Bereich von 12-36 µm gehalten wird;
die raue Oberfläche des flachen Abschnitts (42) in dem konkaven ringförmigen Abschnitt (38) einen Ra-Wert aufweist, der in dem Bereich von 0,2 µm-5 µm liegt; und
ein ringförmiger kleiner vorspringender Abschnitt (44) mit einer Höhe von 1,8 µm oder weniger im äußeren Umfangsabschnitt des konkaven ringförmigen Abschnitts (38) gebildet ist.

8. Verfahren zum Herstellen einer Kontaktlinse (10) nach Anspruch 7, wobei:
das Markierungsmuster (88) in der Gussmatrize (60) in einer Form gebildet wird, so dass eine Abmessung des äußeren Durchmessers des konkaven ringförmigen Abschnitts (38) in einem Bereich von 0,1-0,5 mm liegt, und ein Mittelabschnitt in Breitenrichtung des konkaven ringförmigen Abschnitts (38) im radialen Querschnitt einen flachen Abschnitt (42) darstellt, der eine kleinere Tiefenänderung und einen größeren Krümmungsradius aufweist als die Seitenabschnitte in Breitenrichtung; und
der Laserstrahl einen Laserstrahl mit einem Lichtfleckdurchmesser von 0,05 mm oder kleiner umfasst.

9. Verfahren zum Herstellen einer Kontaktlinse (10) nach Anspruch 7 oder 8, wobei das Markierungsmuster (88) durch Bewegen des Laserstrahls in Umfangsrichtung durch ein Äquivalent von zwei oder mehr Abtastzeilen in radialer Richtung gebildet wird.

10. Verfahren zum Herstellen einer Kontaktlinse (10) nach Anspruch 9, wobei während des Bewegens des Laserstrahls der Abstand der Abtastzeilen des Laserstrahls auf seiner Mittelachse in radialer Richtung des Markierungsmusters (88) kleiner als der Lichtfleck des Laserstrahls ist.

11. Verfahren zum Herstellen einer Kontaktlinse (10) nach einem der Ansprüche 7 bis 10, wobei die Markierung (34) gleichzeitig mit dem Gießen der Linse unter Verwendung einer Linsengussharzgussform (62, 64), die mit einer Gussmatrize (60) hergestellt wurde, durch Übertragen eines Markierungsmusters (88), das in der Gussmatrize gebildet wurde, auf die Linsengussharzgussform (62, 64) und nachfolgendes Rückübertragen davon auf die Linse gebildet wird; und das Markierungsmuster (88) in der Gussmatrize (60) durch Bewegen eines Laserstrahls in Umfangsrichtung über ein Breitenäquivalent von zwei oder mehr Abtastzeilen in radialer Richtung gebildet wird.

12. Verfahren zum Herstellen einer Kontaktlinse (10) nach Anspruch 11, wobei der Laserstrahl, der verwendet wird, um das Markierungsmuster (88) auf der Gussmatrize zu bilden, einen Lichtfleckdurchmesser von 0,05 mm oder weniger aufweist.

13. Verfahren zum Herstellen einer Kontaktlinse (10) nach Anspruch 11 oder 12, wobei:
das Markierungsmuster (88) durch das Bewegen des Laserstrahls entlang von zwei oder mehr Abtastzeilen in radialer Richtung des Markierungsmusters (88) gebildet wird, wobei eine Mittelachse des Laserstrahls in Abständen von 0,03 mm oder weniger positioniert ist;
das Markierungsmuster (88) durch Bewegen des Laserstrahls entlang von vier oder mehr Abtastzeilen in radialer Richtung des Markierungsmusters (88) gebildet wird;
das Markierungsmuster (88) auf der Gussmatrize (60) durch Bestrahlen mit dem Laserstrahl gebildet wurde, während sie in eine Flüssigkeit (92) eingetaucht war; und
die Markierung (35) sich in einer Randzone (24) befindet, die so gebildet ist, dass sie eine optische Zone (22) der Linse umgibt, und in der Zone zwischen 2,7 mm und 6,0 mm von einer Linsenmitte (12) radial nach außen gebildet ist.

## Revendications

1. Lentille de contact (10) comportant un repère (34) sur au moins une face parmi une face antérieure (14) et une face postérieure (16), sur laquelle :
le repère (34) est défini par une partie annulaire concave (38), présentant des bords périphériques extérieur et intérieur de forme circulaire, et une saillie centrale (36) située au centre de la partie annulaire concave (38);
la dimension du diamètre extérieur de la partie annulaire concave (38) est comprise dans une plage allant de 0,1 à 0,5 mm;
la partie centrale, dans le sens de la largeur, de la partie annulaire concave (38), en section radiale, est une partie plane (42) présentant un changement de profondeur plus faible et un rayon de courbure plus grand que les parties latérales, dans le sens de la largeur; et
au moins la partie plane (42) du repère (34) a une surface rugueuse, **caractérisée en ce que** :
le rayon de courbure de la partie plane (42) est supérieur d'un facteur 10 ou plus à une valeur minimale de rayon de courbure de parties de liaison avec les parties de paroi latérale sur chaque côté de la partie plane (42);
la face d'extrémité distale de la saillie centrale (36) présente un diamètre extérieur qui est égal à 0,02 mm ou plus;
la partie périphérique extérieure de la partie annulaire concave (38) est pourvue sur toute la circonférence d'une surface rugueuse présentant un degré de rugosité plus faible que la surface rugueuse de la partie plane (42) de la partie annulaire concave (38);
une profondeur de gorge dans la section radiale de la partie annulaire concave (38) est maintenue dans une plage allant de 12 à 36 µm sur une face moyenne de la partie plane (42);
la surface rugueuse de la partie plane (42) dans la partie annulaire concave (38) a une valeur Ra qui et maintenue dans une plage allant de 0,2 µm à 5 µm; et
une petite portion saillante (44) de forme annulaire, d'une hauteur de 1,8 µm ou moins, est façonnée dans la partie périphérique extérieure de la partie annulaire concave (38).

2. Lentille de contact (10) selon la revendication 1, dans laquelle, sur un contour à gorge de la section radiale de la partie annulaire concave (38), la partie plane (42) est formée sur le fond, avec une dimension en largeur (PL) égale à un tiers ou plus d'une dimension en largeur (L) d'une ouverture du contour à gorge, et avec une planéité de la partie plane (42) de 5 µm ou moins.

3. Lentille de contact (10) selon la revendication 1, dans laquelle la face d'extrémité distale de la saillie centrale (36) a une surface rugueuse présentant un degré de rugosité de surface inférieur à celui de la surface rugueuse de la partie plane (42) de la partie annulaire concave (38).

4. Lentille de contact (10) selon l'une quelconque des revendications 1 à 3, dans laquelle une partie de liaison entre un bord périphérique intérieur de la partie annulaire concave (38) et la saillie centrale (36), et une partie de liaison entre un bord périphérique extérieur de la partie annulaire concave (38) et une partie périphérique extérieure de la partie annulaire concave (38) présentent respectivement en section radiale une forme incurvée en continu.

5. Lentille de contact (10) selon l'une quelconque des revendications 1 à 4, dans laquelle plusieurs repères (34) sont formés en un arrangement groupé.

6. Lentille de contact (10) selon la revendication 5, dans laquelle :
la zone de groupement dans le repère (34) a une taille de 2,2 mm ou moins, dans la direction radiale de la lentille; et
une distance séparant la pluralité de repères (34) les uns des autres est équivalente à une valeur comprise entre un tiers et le double de la dimension du diamètre extérieur du repère (34).

7. Procédé de fabrication d'une lentille de contact (10) comportant un repère (34) formé sur au moins une face parmi une face antérieure (14) et une face postérieure (16) de la lentille de contact (10), le repère (34) étant produit simultanément avec le moulage de la lentille de contact (10) dans une cavité de moulage de lentille, définie par un moule en résine (62, 64) de moulage de lentille qui a été produit par une matrice de moule (60), par transfert d'un motif de repère (88), qui a été formé dans la matrice de moule (60), sur le moule en résine (62, 64) de moulage de lentille, et nouveau transfert subséquent de celui-ci sur la lentille de contact (10), le procédé comprenant l'étape suivante :
production du motif de repère (88) qui comprend une partie annulaire concave (38) présentant des bords périphériques extérieur et intérieur de forme circulaire, et une saillie centrale (36) située au centre de la partie annulaire concave (38), en gravant la partie annulaire concave (38) dans la matrice de moule (60) en utilisant un faisceau laser, au cours d'une submersion dans un liquide (92), de manière à ce que la dimension du diamètre extérieur de la partie annulaire concave (38) soit comprise dans une plage allant de 0,1 à 0,5 mm; la partie centrale, dans le sens de la largeur, de la partie annulaire concave (38), en section radiale, est une partie plane (42) présentant un changement de profondeur plus faible et un rayon de courbure plus grand que les parties latérales, dans le sens de la largeur; et au moins la partie plane (42) du repère (34) a une surface rugueuse, **caractérisé en ce que** :
le rayon de courbure de la partie plane (42) est supérieur d'un facteur 10 ou plus à une valeur minimale de rayon de courbure de parties de liaison avec les parties de paroi latérale sur chaque côté de la partie plane (42);
la face d'extrémité distale de la saillie centrale (36) présente un diamètre extérieur qui est égal à 0,02 mm ou plus;
la partie périphérique extérieure de la partie annulaire concave (38) est pourvue sur toute la circonférence d'une surface rugueuse présentant un degré de rugosité plus faible que la surface rugueuse de la partie plane (42) de la partie annulaire concave (38);
une profondeur de gorge dans la section radiale de la partie annulaire concave (38) est maintenue dans une plage allant de 12 à 36 µm sur une face moyenne de la partie plane (42);
la surface rugueuse de la partie plane (42) dans la partie annulaire concave (38) a une valeur Ra qui est maintenue dans une plage allant de 0,2 µm à 5 µm; et
une petite portion saillante (44) de forme annulaire, d'une hauteur de 1,8 µm ou moins, est façonnée dans la partie périphérique extérieure de la partie annulaire concave (38).

8. Procédé de fabrication d'une lentille de contact (10) selon la revendication 7, selon lequel
le motif de repère (88) dans la matrice de moule (60) est réalisé avec une forme telle que la dimension du diamètre extérieur de la partie annulaire concave (38) soit maintenue dans une plage allant de 0,1 à 0,5 mm, et la partie centrale, dans le sens de la largeur, de la partie annulaire concave (38), en section radiale, soit une partie plane (42) présentant un changement de profondeur plus faible et un rayon de courbure plus grand que les parties latérales, dans le sens de la largeur; et
le faisceau laser est constitué d'un faisceau laser présentant un diamètre de spot de 0,05 mm ou moins.

9. Procédé de fabrication d'une lentille de contact (10) selon la revendication 7, selon lequel le motif de repère (88) est formé par balayage du faisceau laser dans une direction circonférentielle, de l'équivalent de deux ou plus de deux lignes de balayage dans la direction radiale.

10. Procédé de fabrication d'une lentille de contact (10) selon la revendication 9, selon lequel, au cours du balayage du faisceau laser, l'espacement des balayages du faisceau laser, sur l'axe central de celui-ci, dans la direction radiale du motif de repère (88), est plus petit qu'un spot du faisceau laser.

11. Procédé de fabrication d'une lentille de contact (10) selon l'une quelconque des revendications 7 à 10, selon lequel le repère (34) est formé simultanément avec le moulage de la lentille en utilisant un moule en résine (62, 64) de moulage de lentille, qui a été produit avec une matrice de moule (60), au moyen du transfert d'un motif de repère (88), qui a été formé dans la matrice de moule (60), sur le moule en résine (62, 64) de moulage de lentille, et du nouveau transfert subséquent sur la lentille; et le motif de repère (88) dans la matrice de moule (60) est formé par balayage d'un faisceau laser dans une direction circonférentielle, sur une largeur équivalent à deux ou plus de deux lignes de balayage dans la direction radiale.

12. Procédé de fabrication d'une lentille de contact (10) selon la revendication 11, selon lequel le faisceau laser utilisé pour former le motif de repère (88) sur la matrice de moule (60) a un diamètre de spot de 0,05 mm ou moins.

13. Procédé de fabrication d'une lentille de contact (10) selon la revendication 11 ou 12, selon lequel :
le motif de repère (88) est formé par balayage du faisceau laser le long de deux ou plus de deux lignes de balayage, dans la direction radiale du motif de repère (88), l'axe central du faisceau laser étant positionné à des intervalles de 0,03 mm ou moins;
le motif de repère (88) est formé par balayage du faisceau laser le long de quatre ou plus de quatre lignes de balayage, dans la direction radiale du motif de repère (88),
le motif de repère (88) sur la matrice de moule (60) a été formé par irradiation avec le faisceau laser, au cours d'une submersion dans un liquide (92); et
le repère (34) est situé dans une zone périphérique (24) formée autour d'une zone optique (22) de la lentille, et est formé dans une zone située entre 2,7 mm et 6,0 mm radialement à l'extérieur par rapport au centre (12) de la lentille.
